# EUROPEAN PATENT APPLICATION

(11) **EP 4 831 054 A1**
(43) Date of publication of application: **28.10.2026**
(21) Application number: 26171403.4
(22) Date of filing: 09.04.2026
(51) Int. Cl.: B63B 29/04, B60N 2/50

(54) **SEATING SYSTEM**

(30) Priority: 09.04.2025 US 202563786255 P; 07.10.2025 US 202519352036
(71) Applicant: Professional Components Ltd., Sidney, British Columbia V8L 5Y1 (CA)
(72) Inventor: ADAMS, Lee, Sidney, V8L 5Y1 (CA); WICKLUND, Oliver, Sidney, V8L 5Y1 (CA)
(74) Representative: Spencer, Michael David

(57) **Abstract**

A seating system for a vessel is described. The seating system includes a seat pan, a plate coupled thereto for support, a bracket anchored to the vessel, a joint assembly, a damper assembly, and an anti-friction device. The bracket can be vertically slidably relative to the vessel. The joint assembly couples the plate to the bracket to constrain the plate to reciprocal curvilinear motion relative to the bracket to allow confined horizontal movement of the seat pan relative to the bracket for shock mitigation. The damper assembly is oriented to dampen movement of the plate relative to the bracket to absorb shocks. The anti-friction device is disposed between the plate and the bracket to support the plate and the bracket against each other, independent of the joint assembly, while allowing the plate and the bracket to move relative to each other.

## Description

### TECHNICAL FIELD

The disclosure relates generally to seating systems, and more particularly to shock-mitigating seating systems.

### BACKGROUND

During operation of marine vessels, particularly during high-speed maneuvering or in stormy conditions, crew members operating the vessel face a significant challenge in remaining physically balanced and in control. Sudden and unexpected motions of the vessel can disorient crew members and lead to potential loss of control of the marine vessel and/or hamper performance. For example, an unexpected ocean swell taken in during high-speed operation can dislodge from seats. Such shocks are a menace to users, and successfully ameliorating them is an important goal.

Various seating system have been developed to improve operating crews' ability to deal with rough sea conditions, or other situations where crew members experience sudden, expected acceleration. Such seating systems typically comprise a substantially vertical shock attached to an underside of a relatively freely movably seat to allow the seat to rise and fall with the vessel while providing damping thereto so as to improve energy absorption.

In certain heavy-duty applications, such seating systems can undergo very high stresses, which could lead to failure. For example, a seat may shear under extreme stress. In such heavy-duty applications, shocks endured by the vessel can be multidirectional and hard to predict.

### SUMMARY

In some aspects, there is described a seating system for a vessel. The seating system also includes a seat pan; a plate coupled to the seat pan to support the seat pan, a bracket anchored to the vessel, a joint assembly coupling the plate to the bracket to constrain the plate to reciprocal curvilinear motion relative to the bracket to allow confined horizontal movement of the seat pan relative to the bracket for shock mitigation, a damper assembly oriented to dampen movement of the plate relative to the bracket to absorb horizontal shocks, and a plurality of rollers disposed between the plate and the bracket and spaced apart from the joint assembly to support the plate and the bracket against each other while allowing the plate and the bracket to move relative to each other.

Implementations may include one or more of the following features. The seating system where each of the plurality of rollers is attached to the bracket to self-rotate while anchored to the bracket. The plurality of rollers include a plurality of rotatable cylinders. The joint assembly may include a pair of cam slots and a pair of cam followers complementary to, and received into, the pair of cam slots. The plate defines a vertical face on which the cam slots are formed and to which the seat pan is attached. The joint assembly includes a pair of members, each of the members pivotably coupled to each of the plate and the bracket to allow the plate to swing about the bracket for shock mitigation. The damper assembly includes a pair of dampers corresponding to the pair of members. Each damper of the pair of dampers is attached to the bracket and is attached to a corresponding member of the pair of members via a corresponding arm extending perpendicularly away from the corresponding member. The joint assembly is configured to constrain the plate to planar motion relative to the bracket. All feasible kinematic configurations of the plate relative to the bracket define a centrode entirely traced vertically above the joint assembly and the seat pan. The damper assembly includes a pair of dampers inclined in opposing directions in a vertical plane to allow damping of horizontal movement of the plate relative to the bracket and vertical movement of the bracket relative to the vessel. The seating system may include: a base rigidly attached to the vessel, the bracket being slidably coupled to the base to allow constrained vertical sliding of the bracket relative to the base, the pair of dampers coupled to the base to allow damping of the constrained vertical sliding of the bracket relative to the base. A damper is connected to the base and the bracket to dampen vertical movement of the bracket relative to the base. The plate defines a vertical face to which is attached the seat pan, the seating system may include: a platform positioned below the seat pan and cantilevered perpendicularly outwardly from the plate to support the seat pan; and a brace disposed between the plate and the platform and inclined relative to the plate to couple the plate to the platform to support the platform. The seating system may include: an inclined damper coupled to the platform and the plate to dampen movement of the brace. The brace is a two-bar linkage. The plurality of rollers is a first plurality of rollers disposed below the joint assembly, the seating system may include: a second plurality of rollers disposed between the plate and the bracket and spaced apart from the joint assembly to support the plate and the bracket against each other while allowing the plate and the bracket to move relative to each other, the second plurality of rollers being positioned above the joint assembly. The vessel is the marine vessel.

In some aspects, there is described a suspension system for a seat pan of a vessel. The suspension system also includes a plate suitable to be coupled to the seat pan to support the seat pan; a bracket anchored suitable to be anchored to the vessel, a joint assembly coupling the plate to the bracket to constrain the plate to reciprocal curvilinear motion relative to the bracket to allow confined horizontal movement of the seat pan relative to the bracket for shock mitigation, a damper assembly oriented to dampen movement of the plate relative to the bracket to absorb horizontal shocks, and a plurality of rollers disposed between the plate and the bracket and spaced apart from the joint assembly to allow the plate and the bracket to roll against each other while supporting the plate against the bracket.

Implementations may include one or more of the following features. The suspension system where all feasible kinematic configurations of the plate relative to the bracket define a centrode entirely traced vertically above the joint assembly. A damper is connected to the base and the bracket to dampen vertical movement of the bracket relative to the base.

In some aspects, there is described a seating system for a vessel. The seating system also includes a seat pan; a plate coupled to the seat pan to support the seat pan; a base attached to the vessel; a bracket slidably coupled to the base to allow constrained vertical sliding of the bracket relative to the base; a joint assembly coupling the plate to the bracket to constrain the plate to reciprocal curvilinear motion relative to the bracket to allow confined horizontal movement of the seat pan relative to the bracket for shock mitigation; and a damper assembly oriented to dampen movement of the plate relative to the bracket to absorb horizontal shocks, and connected to the base and the bracket to dampen vertical movement of the bracket relative to the base.

Implementations may include one or more of the following features. The seating system where the base defines a pair of guides opposite to each other to receive the bracket between the pair of guides, the bracket being received in the pair of guides to constrain the bracket to vertical motion between the pair of guides. The bracket includes a pair of wheels movably engaged with the pair of guides, each of the pair of guides including a track suitable to receive a corresponding wheel of the pair of wheels to allow rolling of the pair of wheels in the pair of guides to facilitate vertical movement of the bracket. The joint assembly is coupled to the plate via a vertical face of the plate that defines a vertical plane, the plate being constrained to planar motion relative to the bracket parallel to the vertical plane, the bracket being constrained to vertical motion parallel to the vertical plane. The joint assembly may include a pair of cam slots and a pair of cam followers complementary to, and received into, the pair of cam slots. The plate defines a vertical face on which the cam slots are formed and to which the seat pan is attached. The joint assembly includes a pair of members, each of the members pivotably coupled to each of the plate and the bracket to allow the plate to swing about the bracket for shock mitigation. The damper assembly includes a pair of dampers corresponding to the pair of members. Each damper of the pair of dampers is attached to the bracket and is coupled to a corresponding member of the pair of members via a corresponding arm extending perpendicularly away from the corresponding member. The joint assembly is configured to constrain the plate to horizontal and vertical motion within a vertical plane relative to the bracket. All feasible kinematic configurations of the plate relative to the bracket define a centrode entirely traced vertically above the joint assembly and the seat pan. The damper assembly includes a pair of dampers inclined in opposing directions in a vertical plane to allow damping of horizontal and vertical movement of the bracket relative to the base. The plate defines a vertical face to which is attached the seat pan. The seating system may include: a platform positioned below the seat pan and cantilevered perpendicularly outwardly from the plate to support the seat pan; and a brace disposed between the plate and the platform and inclined relative to the plate to couple the plate to the platform to support the platform. The seating system may include: a seat pan damper coupled to the platform and the plate to dampen movement of the brace. The brace is a two-bar linkage. The seating system may include: a plurality of rollers disposed between the plate and the bracket and spaced apart from the joint assembly to support the plate and the bracket against each other while allowing the plate and the bracket to move relative to each other. Each of the plurality of rollers is attached to the bracket to self-rotate while anchored to the bracket. The plurality of rollers are rotatable cylinders. The plurality of rollers are a first plurality of rollers and are disposed below the joint assembly, the seating system may include: a second plurality of rollers disposed between the plate and the bracket and spaced apart from the joint assembly to support the plate and the bracket against each other while allowing the plate and the bracket to move relative to each other, the second plurality of rollers being positioned above the joint assembly. The vessel is the user vessel.

In some aspects, there is described a suspension system for a seat pan of a vessel. The suspension system also includes a plate suitable to be coupled to the seat pan to support the seat pan; a base suitable to be attached to the vessel; a bracket slidably coupled to the base to allow constrained vertical sliding of the bracket relative to the base; a joint assembly coupling the plate to the bracket to constrain the plate to cyclic planar motion relative to the bracket to allow confined horizontal movement of the seat pan relative to the bracket for shock mitigation; and a damper assembly oriented to dampen movement of the plate relative to the bracket to absorb horizontal shocks, and connected to the base and the bracket to dampen vertical movement of the bracket relative to the base.

In some aspects, there is described a seating system for a vessel. The seating system also includes a seat pan; a plate coupled to the seat pan to support the seat pan, a bracket anchored to the vessel, a joint assembly coupling the plate to the bracket to constrain the plate to reciprocal curvilinear motion relative to the bracket to allow confined horizontal movement of the seat pan relative to the bracket for shock mitigation, a damper assembly oriented to dampen movement of the plate relative to the bracket to absorb horizontal shocks, and an anti-friction device disposed between the plate and the bracket to support the plate and the bracket against each other, independent of the joint assembly, while allowing the plate and the bracket to move relative to each other.

Implementations may include one or more of the following features. The seating system where the anti-friction device includes a plurality of rollers. The anti-friction device is spaced apart from the joint assembly. Each of the plurality of rollers is attached to the bracket to self-rotate while anchored to the bracket. The plurality of rollers include a plurality of rotatable cylinders. The joint assembly may include a pair of cam slots and a pair of cam followers complementary to, and received into, the pair of cam slots. The plate defines a vertical face on which the cam slots are formed and to which the seat pan is attached. The joint assembly includes a pair of members, each of the members pivotably coupled to each of the plate and the bracket to allow the plate to swing about the bracket for shock mitigation. The damper assembly includes a pair of dampers corresponding to the pair of members. Each damper of the pair of dampers is attached to the bracket and is attached to a corresponding member of the pair of members via a corresponding arm extending perpendicularly away from the corresponding member. The joint assembly is configured to constrain the plate to planar motion relative to the bracket. All feasible kinematic configurations of the plate relative to the bracket define a centrode entirely traced vertically above the joint assembly and the seat pan. The damper assembly includes a pair of dampers inclined in opposing directions in a vertical plane to allow damping of horizontal movement of the plate relative to the bracket and vertical movement of the bracket relative to the vessel. The seating system may include: a base rigidly attached to the vessel, the bracket being slidably coupled to the base to allow constrained vertical sliding of the bracket relative to the base, the pair of dampers coupled to the base to allow damping of the constrained vertical sliding of the bracket relative to the base. A damper is connected to the base and the bracket to dampen vertical movement of the bracket relative to the base. The plate defines a vertical face to which is attached the seat pan, the seating system may include: a platform positioned below the seat pan and cantilevered perpendicularly outwardly from the plate to support the seat pan; and a brace disposed between the plate and the platform and inclined relative to the plate to couple the plate to the platform to support the platform. The seating system may include: an inclined damper coupled to the platform and the plate to dampen movement of the brace. The brace is a two-bar linkage. The anti-friction device is a first anti-friction device and is disposed below the joint assembly, the seating system may include: a second anti-friction device disposed between the plate and the bracket to support the plate and the bracket against each other, independent of the joint assembly, while allowing the plate and the bracket to move relative to each other, the second anti-friction device being positioned above the joint assembly. The second anti-friction device is spaced apart from the joint assembly. The vessel is the marine vessel.

In some aspects, there is described a suspension system for a seat pan of a vessel. The suspension system also includes a plate suitable to be coupled to the seat pan to support the seat pan; a bracket anchored suitable to be anchored to the vessel, a joint assembly coupling the plate to the bracket to constrain the plate to reciprocal curvilinear motion relative to the bracket to allow confined horizontal movement of the seat pan relative to the bracket for shock mitigation, a damper assembly oriented to dampen movement of the plate relative to the bracket to absorb horizontal shocks, and an anti-friction device disposed between the plate and the bracket to support the plate and the bracket against each other, independent of the joint assembly, while allowing the plate and the bracket to move relative to each other.

Implementations may include one or more of the following features. The suspension system where all feasible kinematic configurations of the plate relative to the bracket define a centrode entirely traced vertically above the joint assembly. A damper is connected to the base and the bracket to dampen vertical movement of the bracket relative to the base.

In some aspects, there is described a seating system for a vessel. The seating system also includes a seat pan; a plate coupled to the seat pan to support the seat pan; a bracket slidably coupled to the vessel to allow constrained vertical sliding of the bracket relative to the vessel; a joint assembly coupling the plate to the bracket to constrain the plate to reciprocal curvilinear motion relative to the bracket to allow confined horizontal movement of the seat pan relative to the bracket for shock mitigation; and a damper assembly oriented to dampen movement of the plate relative to the bracket to absorb horizontal shocks, and connected to the vessel and the bracket to dampen vertical movement of the bracket relative to the vessel.

Implementations may include one or more of the following features. The seating system further comprises a base attached to the vessel and defining a pair of guides opposite to each other to receive the bracket between the pair of guides to slidably couple the bracket to the base to allow constrained vertical sliding of the bracket relative to the base, the bracket being received in the pair of guides to constrain the bracket to vertical motion between the pair of guides, the damper assembly connected to the base and the bracket to dampen vertical movement of the bracket relative to the base. The bracket includes a pair of wheels movably engaged with the pair of guides, each of the pair of guides including a track suitable to receive a corresponding wheel of the pair of wheels to allow rolling of the pair of wheels in the pair of guides to facilitate vertical movement of the bracket. The joint assembly is coupled to the plate via a vertical face of the plate that defines a vertical plane, the plate being constrained to planar motion relative to the bracket parallel to the vertical plane, the bracket being constrained to vertical motion parallel to the vertical plane. The joint assembly may include a pair of cam slots and a pair of cam followers complementary to, and received into, the pair of cam slots. The plate defines a vertical face on which the cam slots are formed and to which the seat pan is attached. The joint assembly includes a pair of members, each of the members pivotably coupled to each of the plate and the bracket to allow the plate to swing about the bracket for shock mitigation. The damper assembly includes a pair of dampers corresponding to the pair of members. Each damper of the pair of dampers is attached to the bracket and is coupled to a corresponding member of the pair of members via a corresponding arm extending perpendicularly away from the corresponding member. The joint assembly is configured to constrain the plate to horizontal and vertical motion within a vertical plane relative to the bracket. All feasible kinematic configurations of the plate relative to the bracket define a centrode entirely traced vertically above the joint assembly and the seat pan. The damper assembly includes a pair of dampers inclined in opposing directions in a vertical plane to allow damping of horizontal and vertical movement of the bracket relative to the vessel. The plate defines a vertical face to which is attached the seat pan. The seating system may include: a platform positioned below the seat pan and cantilevered perpendicularly outwardly from the plate to support the seat pan; and a brace disposed between the plate and the platform and inclined relative to the plate to couple the plate to the platform to support the platform. The seating system may include: a seat pan damper coupled to the platform and the plate to dampen movement of the brace. The brace is a two-bar linkage. The seating system may include: an anti-friction device disposed between the plate and the bracket to support the plate and the bracket against each other, independent of the joint assembly (and/or spaced apart from the joint assembly), while allowing the plate and the bracket to move relative to each other. The anti-friction device includes a plurality of rollers. Each of the plurality of rollers is attached to the bracket to self-rotate while anchored to the bracket. The plurality of rollers are rotatable cylinders. The anti-friction device is a first anti-friction device and is disposed below the joint assembly, the seating system may include: a second anti-friction disposed between the plate and the bracket to support the plate and the bracket against each other, independent of the joint assembly (and/or spaced apart from the joint assembly), while allowing the plate and the bracket to move relative to each other, the second anti-friction device being positioned above the joint assembly. The vessel is the user vessel.

In some aspects, there is described a suspension system for a seat pan of a vessel. The suspension system also includes a plate suitable to be coupled to the seat pan to support the seat pan; a bracket slidably coupled to the vessel to allow constrained vertical sliding of the bracket relative to the vessel; a joint assembly coupling the plate to the bracket to constrain the plate to cyclic planar motion relative to the bracket to allow confined horizontal movement of the seat pan relative to the bracket for shock mitigation; and a damper assembly oriented to dampen movement of the plate relative to the bracket to absorb horizontal shocks, and connected to the vessel and the bracket to dampen vertical movement of the bracket relative to the vessel.

Embodiments can include combinations of the above features.

Further details of these and other aspects of the subject matter of this application will be apparent from the detailed description included below and the drawings.

### DESCRIPTION OF THE DRAWINGS

Reference is now made to the accompanying drawings, in which:
**FIG. 1** is a schematic view of an example vessel during field operation thereof;
**FIG. 2A** is a perspective view of the seating system, in accordance with an embodiment;
**FIG. 2B** is a rear elevation view of the seating system of **FIG. 2A****;**
**FIG. 2C** is a front elevation view of the seating system of **FIG. 2A****;**
**FIG. 2D** is a side elevation view of the seating system of **FIG. 2A****;**
**FIG. 3A** is a perspective view of a suspension system, in accordance with an embodiment;
**FIG. 3B** is a partially exploded perspective view of the suspension system of **FIG. 3A****;**
**FIG. 4A** is a perspective view of a subassembly of the suspension system of **FIGS. 3A-3B****;**
**FIG. 4B** is a front elevation view of the subassembly of **FIG. 4A****;**
**FIG. 4C** is a rear elevation view of the subassembly of **FIG. 4A****;**
**FIG. 4D** is a side elevation view of the subassembly of **FIG. 4A****;**
**FIG. 4E** is a bottom plan view of the subassembly of **FIG. 4A****;**
**FIG. 4F** is a top plan view of the subassembly of **FIG. 4A****;**
**FIG. 5A** is a perspective view of a subassembly of the suspension system, in accordance with another embodiment;
**FIG. 5B** is a front elevation view of the subassembly of **FIG. 5A****;**
**FIG. 5C** is a side elevation view of the subassembly of **FIG. 5A****;**
**FIG. 6A** is a perspective view of a subassembly of the suspension system, in accordance with yet another embodiment;
**FIG. 6B** is a front elevation view of the subassembly of **FIG. 6A****;**
**FIG. 6C** is a side elevation view of the subassembly of **FIG. 6A****;**
**FIG. 7A** is a perspective view of a suspension system, in accordance with another embodiment;
**FIG. 7B** is a partially exploded perspective view of the suspension system of **FIG. 7A****;**
**FIG. 7C** is a perspective view of the suspension system of **FIG. 7A** having mounted thereon a seat pan;
**FIG. 8A** is a schematic front elevation view of a portion of a suspension system in a first stage of operation, in accordance with an embodiment;
**FIG. 8B** is a schematic front elevation view of the portion of the suspension system in a second stage of operation, in accordance with an embodiment;
**FIG. 8C** is a schematic front elevation view of the portion of the suspension system in a third stage of operation, in accordance with an embodiment;
**FIG. 8D** is an enlarged front elevation view of the portion of the suspension system in **FIGS. 8A-8C****;**
**FIG. 9** is a schematic front elevation view of a subassembly, in accordance with another embodiment;
**FIG. 10** is a schematic front elevation view of a subassembly, in accordance with yet another embodiment;
**FIG. 11** is a schematic front elevation view of a subassembly, in accordance with a further embodiment;
**FIG. 12** is a schematic front elevation view of a subassembly, in accordance with yet further embodiment;
**FIG. 13** is a front elevation of a suspension system, in accordance with another embodiment;
**FIG. 14** is a schematic front elevation view of a suspension system, in accordance with yet another embodiment;
**FIG. 15** is a schematic front elevation view of a suspension system, in accordance with a further embodiment;
**FIG. 16** is a perspective view of a seating system, in accordance with an embodiment;
**FIG. 17A** is a front elevation view of a subassembly of the seating system of **FIG. 16** in a first position;
**FIG. 17B** is a front elevation view of a subassembly of the seating system of **FIG. 16** in a second position; and
**FIG. 17C** is a front elevation view of a subassembly of the seating system of **FIG. 16** in a third position.

### DETAILED DESCRIPTION

The following disclosure relates to a seating system for a marine vessel. In some embodiments, the systems and suspensions thereof described herein provide improved damping of multidimensional shocks in an advantageously compact package with improved rigidity and strength. As referred to herein, the term vessel may include various types of craft and vehicles, including boats, aircraft, trucks, spacecraft, armoured personal carrier, and various other vehicles for use on land, air, sea, and/or space. Nevertheless, it is understood that the systems and devices disclosed herein are particularly suited to marine vessels.

The seating system comprises a plate coupled to a seat pan to support the seat pan and a joint assembly coupling the plate to a bracket anchored to the vessel to constrain the plate to reciprocal motion or reciprocal curvilinear motion, relative to the bracket to allow confined horizontal movement of the seat pan relative to the bracket for shock mitigation. A damper assembly is oriented to dampen movement of the plate relative to the bracket to absorb horizontal shocks. A plurality of rollers are disposed between the plate and the bracket and spaced apart from the joint assembly to support the plate and the bracket against each other while allowing the plate and the bracket to move relative to each other. The bracket can be slidably coupled to a base attached to the vessel to allow vertical movement of the seat pan, and the damper assembly may also be configured to dampen vertical movement of the seat pan.

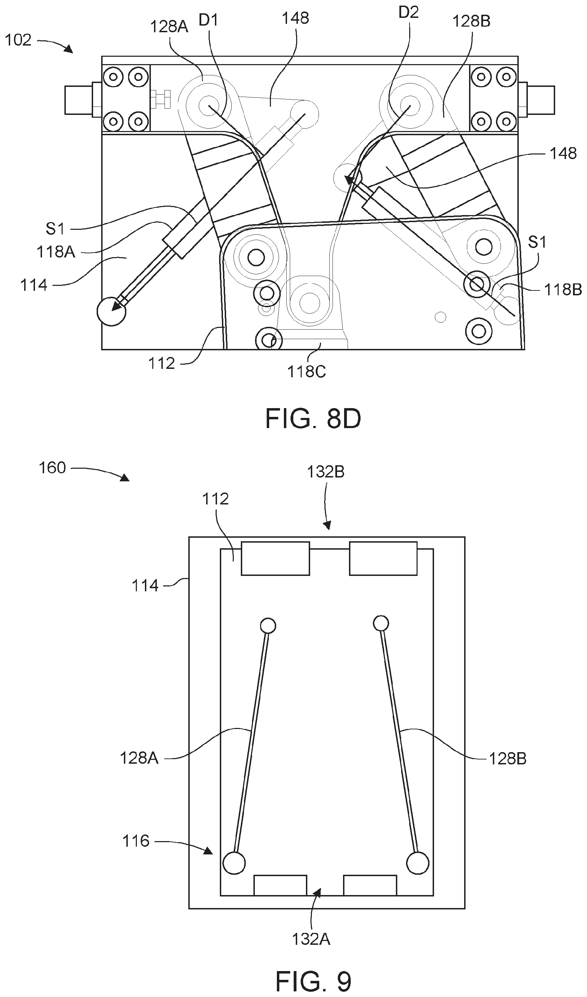

Advantageously, the plurality of rollers provide rigidity to the assembly to allow achieving a compact assembly at a lower cost. For example, the seat pan may be supported by a plate that is pivotably coupled to the bracket without any further coupling connections or attachments to the bracket. For example, the plurality of rollers may be strategically positioned between the plate and the bracket to achieve a desired rigidity. It is found particularly advantageous to use two spaced-apart pairs of rollers (see FIG. 9), as it allows the use of longer linkages and members in the assembly, as will be described later.

Advantageously, the seating system can mitigate shocks, by absorbing or dissipating them, in multiple directions and particularly in both vertical and horizontal directions in a compact package.

Aspects of various embodiments are now described in a series of statements.

Statement 1: A seating system for a vessel, comprising: a seat pan; a plate coupled to the seat pan to support the seat pan; a bracket anchored to the vessel; a joint assembly coupling the plate to the bracket to constrain the plate to reciprocal curvilinear motion relative to the bracket to allow confined horizontal movement of the seat pan relative to the bracket for shock mitigation; a damper assembly oriented to dampen movement of the plate relative to the bracket to absorb horizontal shocks; and an anti-friction device disposed between the plate and the bracket to support the plate and the bracket against each other, independent of the joint assembly, while allowing the plate and the bracket to move relative to each other.

Statement 2: The seating system as described in Statement 1, wherein the anti-friction device is spaced apart from the joint assembly.

Statement 3: The seating system as described in any one of Statements 1 or 2, wherein the anti-friction device includes a plurality of rollers.

Statement 4: The seating system as described in Statement 3, wherein each of the plurality of rollers is attached to the bracket to self-rotate while anchored to the bracket.

Statement 5: The seating system as described in any one of Statements 3 or 4, wherein the plurality of rollers include a plurality of rotatable cylinders.

Statement 6: The seating system as described in any one of Statements 1 to 5, wherein the joint assembly comprises a pair of cam slots and a pair of cam followers complementary to, and received into, the pair of cam slots.

Statement 7: The seating system as described in Statement 6, wherein the plate defines a vertical face on which the cam slots are formed and to which the seat pan is attached.

Statement 8: The seating system as described in any one of Statements 1 to 7, wherein the joint assembly includes a pair of members, each of the members pivotably coupled to each of the plate and the bracket to allow the plate to swing about the bracket for shock mitigation.

Statement 9: The seating system as described in Statement 8, wherein the damper assembly includes a pair of dampers corresponding to the pair of members.

Statement 10: The seating system as described in any one of Statements 8 or 9, wherein each damper of the pair of dampers is attached to the bracket and is attached to a corresponding member of the pair of members via a corresponding arm extending perpendicularly away from the corresponding member.

Statement 11: The seating system as described in any one of Statements 1 to 10, wherein the joint assembly is configured to constrain the plate to planar motion relative to the bracket.

Statement 12: The seating system as described in any one of Statements 1 to 11, wherein all feasible kinematic configurations of the plate relative to the bracket define a centrode entirely traced vertically above the joint assembly and the seat pan.

Statement 13: The seating system as described in any one of Statements 1 to 12, wherein the damper assembly includes a pair of dampers inclined in opposing directions in a vertical plane to allow damping of horizontal movement of the plate relative to the bracket and vertical movement of the bracket relative to the vessel.

Statement 14: The seating system as described in Statement 13, further comprising: a base rigidly attached to the vessel, the bracket being slidably coupled to the base to allow constrained vertical sliding of the bracket relative to the base, the pair of dampers coupled to the base to allow damping of the constrained vertical sliding of the bracket relative to the base.

Statement 15: The seating system as described in any one of Statements 1 to 14, further comprising: a base attached to the vessel, the bracket being slidably coupled to the base to allow constrained vertical sliding of the bracket relative to the base, wherein a damper is connected to the base and the bracket to dampen vertical movement of the bracket relative to the base.

Statement 16: The seating system as described in any one of Statements 1 to 15, wherein the plate defines a vertical face to which is attached the seat pan, the seating system further comprising: a platform positioned below the seat pan and cantilevered perpendicularly outwardly from the plate to support the seat pan; and a brace disposed between the plate and the platform and inclined relative to the plate to couple the plate to the platform to support the platform.

Statement 17: The seating system as described in Statement 16, further comprising: an inclined damper coupled to the platform and the plate to dampen movement of the brace.

Statement 18: The seating system as described in Statement 17, wherein the brace is a two-bar linkage.

Statement 19: The seating system as described in any one of Statements 1 to 18, wherein the anti-friction device is a first anti-friction device and is disposed below the joint assembly, the seating system further comprising: a second anti-friction device disposed between the plate and the bracket to support the plate and the bracket against each other, independent of the joint assembly, while allowing the plate and the bracket to move relative to each other, the second anti-friction device being positioned above the joint assembly.

Statement 20: The seating system as described in Statement 19, wherein the second anti-friction device is spaced apart from the joint assembly.

Statement 21: A marine vessel, comprising a seating system as described in any one of Statements 1 to 20, wherein the vessel is the marine vessel.

Statement 22: A suspension system for a seat pan of a vessel, comprising: a plate suitable to be coupled to the seat pan to support the seat pan; a bracket anchored suitable to be anchored to the vessel; a joint assembly coupling the plate to the bracket to constrain the plate to reciprocal curvilinear motion relative to the bracket to allow confined horizontal movement of the seat pan relative to the bracket for shock mitigation; a damper assembly oriented to dampen movement of the plate relative to the bracket to absorb horizontal shocks; and an anti-friction device disposed between the plate and the bracket to support the plate and the bracket against each other, independent of the joint assembly, while allowing the plate and the bracket to move relative to each other.

Statement 23: The suspension system as described in Statement 22, wherein all feasible kinematic configurations of the plate relative to the bracket define a centrode entirely traced vertically above the joint assembly.

Statement 24: The suspension system as described in any one of Statements 22 or 23, further comprising: a base suitable to be attached to the vessel, the bracket being slidably coupled to the base to allow constrained vertical sliding of the bracket relative to the base, wherein a damper is connected to the base and the bracket to dampen vertical movement of the bracket relative to the base.

Statement 25: A seating system for a vessel, comprising: a seat pan; a plate coupled to the seat pan to support the seat pan; a bracket slidably coupled to the vessel to allow constrained vertical sliding of the bracket relative to the vessel; a joint assembly coupling the plate to the bracket to constrain the plate to reciprocal curvilinear motion relative to the bracket to allow confined horizontal movement of the seat pan relative to the bracket for shock mitigation; and a damper assembly oriented to dampen movement of the plate relative to the bracket to absorb horizontal shocks, and connected to the vessel and the bracket to dampen vertical movement of the bracket relative to the vessel.

Statement 26: The seating system as described in Statement 25, further comprising: a base attached to the vessel and defining a pair of guides opposite to each other to receive the bracket between the pair of guides to slidably couple the bracket to the base to allow constrained vertical sliding of the bracket relative to the base, the bracket being received in the pair of guides to constrain the bracket to vertical motion between the pair of guides, the damper assembly connected to the base and the bracket to dampen vertical movement of the bracket relative to the base.

Statement 27: The seating system as described in Statement 26, wherein the bracket includes a pair of wheels movably engaged with the pair of guides, each of the pair of guides including a track suitable to receive a corresponding wheel of the pair of wheels to allow rolling of the pair of wheels in the pair of guides to facilitate vertical movement of the bracket.

Statement 28: The seating system as described in any one of Statements 26 or 27, wherein the joint assembly is coupled to the plate via a vertical face of the plate that defines a vertical plane, the plate being constrained to planar motion relative to the bracket parallel to the vertical plane, the bracket being constrained to vertical motion parallel to the vertical plane.

Statement 29: The seating system as described in any one of Statements 25 to 28, wherein the joint assembly comprises a pair of cam slots and a pair of cam followers complementary to, and received into, the pair of cam slots.

Statement 30: The seating system as described in Statement 29, wherein the plate defines a vertical face on which the cam slots are formed and to which the seat pan is attached.

Statement 31: The seating system as described in any one of Statements 25 to 30, wherein the joint assembly includes a pair of members, each of the members pivotably coupled to each of the plate and the bracket to allow the plate to swing about the bracket for shock mitigation.

Statement 32: The seating system as described in Statement 31, wherein the damper assembly includes a pair of dampers corresponding to the pair of members.

Statement 33: The seating system as described in any one of Statements 31 or 32, wherein each damper of the pair of dampers is attached to the bracket and is coupled to a corresponding member of the pair of members via a corresponding arm extending perpendicularly away from the corresponding member.

Statement 34: The seating system as described in any one of Statements 25 to 33, wherein the joint assembly is configured to constrain the plate to horizontal and vertical motion within a vertical plane relative to the bracket.

Statement 35: The seating system as described in any one of Statements 25 to 34, wherein all feasible kinematic configurations of the plate relative to the bracket define a centrode entirely traced vertically above the joint assembly and the seat pan.

Statement 36: The seating system as described in any one of Statements 25 to 35, wherein the damper assembly includes a pair of dampers inclined in opposing directions in a vertical plane to allow damping of horizontal and vertical movement of the bracket relative to the vessel.

Statement 37: The seating system as described in any one of Statements 25 to 36, wherein the plate defines a vertical face to which is attached the seat pan.

Statement 38: The seating system as described in Statement 37, further comprising: a platform positioned below the seat pan and cantilevered perpendicularly outwardly from the plate to support the seat pan; and a brace disposed between the plate and the platform and inclined relative to the plate to couple the plate to the platform to support the platform.

Statement 39: The seating system as described in Statement 38, further comprising: a seat pan damper coupled to the platform and the plate to dampen movement of the brace.

Statement 40: The seating system as described in any one of Statements 38 or 39, wherein the brace is a two-bar linkage.

Statement 41: The seating system as described in any one of Statements 25 to 40, further comprising: an anti-friction device disposed between the plate and the bracket to support the plate and the bracket against each other, independent of the joint assembly, while allowing the plate and the bracket to move relative to each other.

Statement 42: The seating system as described in Statement 41, wherein the anti-friction device includes a plurality of rollers.

Statement 43: The seating system as described in Statement 42, wherein each of the plurality of rollers is attached to the bracket to self-rotate while anchored to the bracket.

Statement 44: The seating system as described in any one of Statements 42 or 43, wherein the plurality of rollers are rotatable cylinders.

Statement 45: The seating system as described in any one of Statements 41 to 44, wherein the anti-friction device is a first anti-friction device and is disposed below the joint assembly, the seating system further comprising: a second anti-friction disposed between the plate and the bracket to support the plate and the bracket against each other, independent of the joint assembly, while allowing the plate and the bracket to move relative to each other, the second anti-friction device being positioned above the joint assembly.

Statement 46: A user vessel, comprising a seating system as described in any one of Statements 25 to 45, wherein the vessel is the user vessel.

Statement 47: A suspension system for a seat pan of a vessel, comprising: a plate suitable to be coupled to the seat pan to support the seat pan; a bracket slidably coupled to the vessel to allow constrained vertical sliding of the bracket relative to the vessel; a joint assembly coupling the plate to the bracket to constrain the plate to cyclic planar motion relative to the bracket to allow confined horizontal movement of the seat pan relative to the bracket for shock mitigation; and a damper assembly oriented to dampen movement of the plate relative to the bracket to absorb horizontal shocks, and connected to the vessel and the bracket to dampen vertical movement of the bracket relative to the vessel.

Aspects of various embodiments are described in relation to the figures.

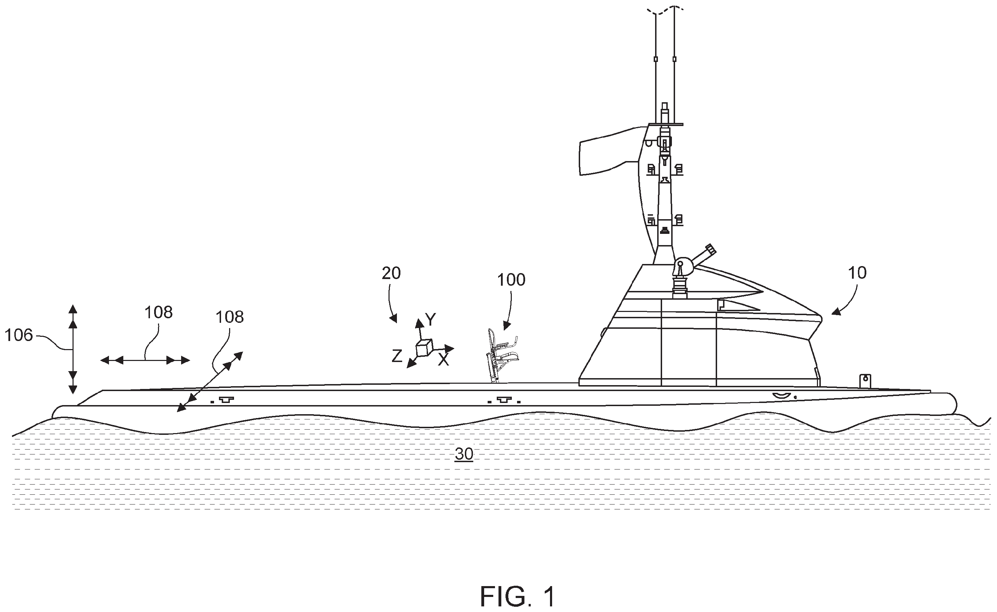

**FIG. 1** is a schematic view of an example vessel **10** during field operation thereof. As shown in **FIG.** 1, the vessel **10** may be a marine vessel at sea **30.**

The vessel **10** undergoes multidirectional motion, e.g. due to sea conditions, self-propulsion, and other factors. As illustrated by the double-headed arrows in **FIG. 1****,** the vessel may undergo vertical movement **106** and horizontal movement **108** in a non-vertical plane.

The vessel **10** comprises, or has mounted thereon, a seating system **100.** The seating system **100** may be suitable for seating an operator of the vessel **10.** For example, in various embodiments, the seating system **100** may include controls to control the vessel **10.**

The seating system **100** may generally define three mutually non-parallel directions **20.** The directions **20** include a vertical direction (axis **Y)** and horizontal directions (axis **X** and axis **Z)** that are non-parallel to the vertical direction, e.g. perpendicular thereto. The horizontal directions may also be referred to as lateral directions. As referred to herein, a vertical direction may refer to a direction of the three directions **20** that is most aligned with the direction of gravitational acceleration.

In many cases, vertical movements **106** and the horizontal movements **108** may take the form of shocks, e.g. sudden, unexpected, and/or large motions, or motions wherein the rate of acceleration (jerk) may be excessive. In such circumstances, a person seated on the seating system **100** (a seat user or user), e.g. an operator of the vessel **10,** may be knocked off the seating system **100,** may become disoriented, and/or experience discomfort especially in maintaining a command position on the seating system **100.** Such difficulties may negatively impact performance of an operator seated in the seating system **100** (or seat) and may lead to unsafe situations on-board the vessel **10.** Accordingly, the seating system **100** is configured to mitigate such shocks to improve user experience and/or improve performance.

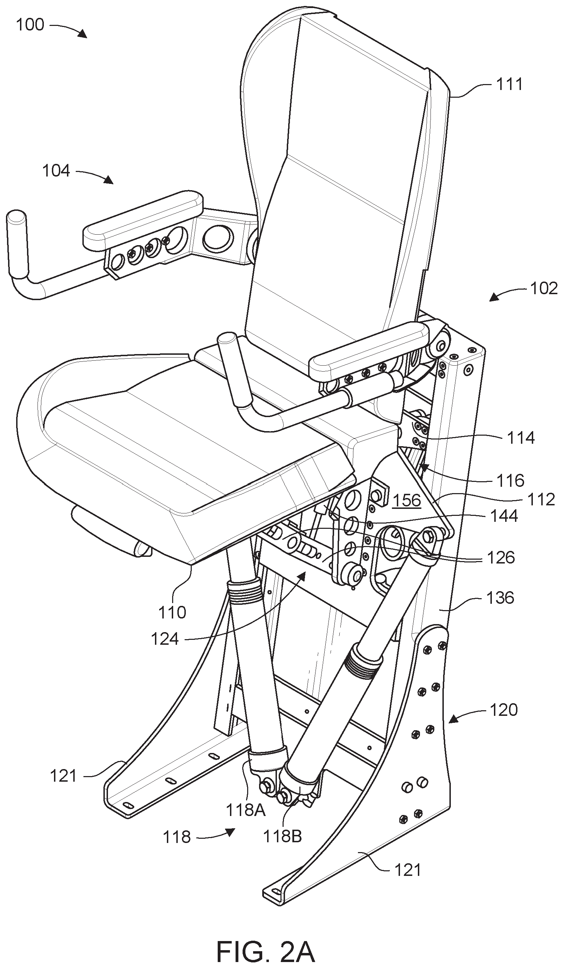

**FIG. 2A** is a perspective view of the seating system **100,** in accordance with an embodiment.

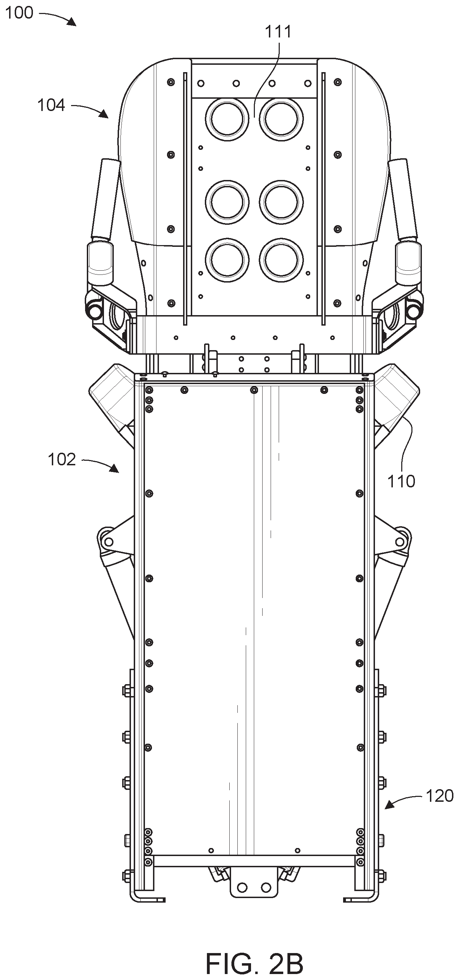

**FIG. 2B** is a rear elevation view of the seating system **100** of **FIG. 2A****.**

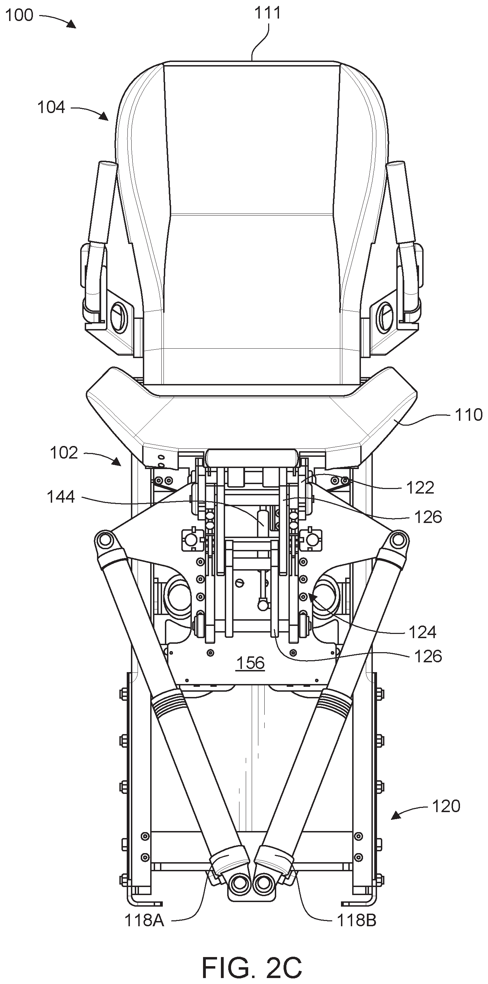

**FIG. 2C** is a front elevation view of the seating system **100** of **FIG. 2A****.**

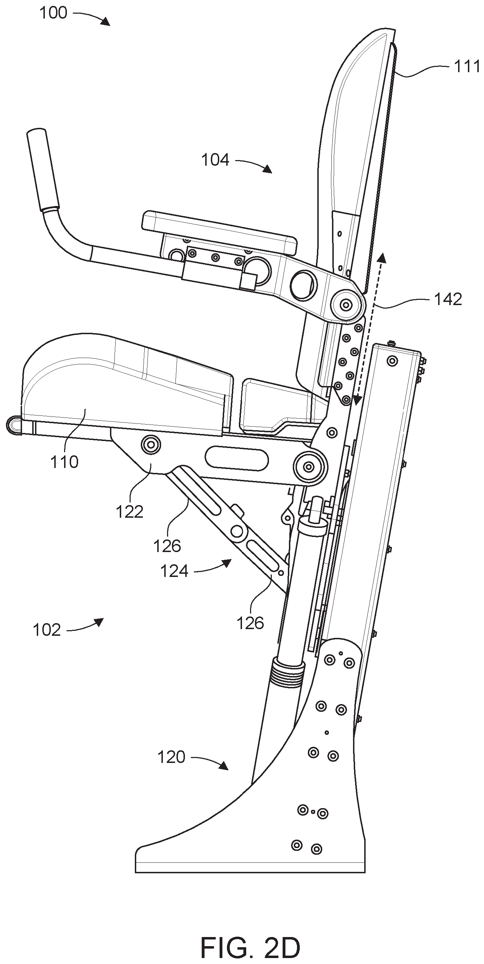

**FIG. 2D** is a side elevation view of the seating system **100** of **FIG. 2A****.**

The seating system **100** comprises a suspension system **102** and a seat **104.**

Referring to **FIGS. 2A-2C****,** the seat **104** includes a seat pan **110** and a back rest **111.** Cushions, arm rests, hand holds, and/or other components may be provided on the seat **104.** In various embodiments, a user may sit on the seat pan **110.** In some embodiments, the seat pan **110** or a central sitting area of the seat pan **110** may define the horizontal direction.

The suspension system **102** system supports the seat **104** and provides damping of motion of the seat **104,** e.g. as the vessel **10** is in motion. Such damping may be provided in vertical and/or horizontal directions. It is understood that the horizontal and vertical directions, as referred to herein, are defined by the suspension system **102.** The vertical direction may define a component in the direction of gravitational acceleration that is greater than components of the horizontal directions. The vertical direction may be defined by the seat pan since the seat pan is configured to support a user against gravity. In some embodiments, the suspension system **102** system may provide only damping in the horizontal direction. In this case, the horizontal direction may be defined as a direction whose greatest component is not aligned with the direction of gravitational acceleration.

The suspension system **102** includes a base **120** attached to the vessel **10.** The base **120** may be rigidly attached to the vessel **10.** The base **120** may be attached to the vessel **10** via a pair of legs **121.** For example, the legs **121** may be bolted down to the vessel **10.**

The suspension system **102** includes a plate **112** coupled to the seat pan **110** to support the seat pan **110,** and a bracket **114** suitable to be anchored to the vessel **10.** For example, the bracket **114** may be bolted down, directly or indirectly, to the vessel **10,** or movably coupled to a component of the suspension system **102** that is bolted down to the vessel **10.**

The plate **112** may define a face **156.** The face **156** may be a vertical face. The seat pan **110** may be attached to the face **156** to attach the seat pan **110** to the plate **112.**

A platform **122** may be attached to the plate **112** and the seat pan **110.** The platform **122** may be positioned below the seat pan **110.** The platform **122** may be cantilevered perpendicularly outwardly from the plate **112** to support the seat pan **110.**

A brace **124** may be disposed between the plate **112** and the platform **122.** The brace **124** is inclined relative to the plate **112** to couple the plate **112** to the platform **122** to support the platform **122.** In various embodiments, the brace **124** is a two-bar linkage. As shown in **FIGS. 2C-2D****,** the brace **124** may comprise a pair of bars **126** that are pivotably coupled to each other to form a two-bar linkage. An inclined seat pan damper **144** may be coupled to the platform **122** and the plate **112** to dampen movement of the brace **124** and/or to provide and adjustable seat for a user. Advantageously, the two-bar linkage may facilitate movement and damping of shocks to the seat pan **110.** In some embodiments, the two-bar linkage may be replaced with a rigid single-bar linkage.

A joint assembly **116** couples the plate **112** to the bracket **114** to constrain motion of the plate **112** to allow confined horizontal movement of the seat pan **110** relative to the bracket **114** for shock mitigation.

For example, when the seating system **100** is subject to an external at least partially horizontal shock, e.g. caused due to a movement of the vessel **10** along a direction at least partially parallel to the **X-Z** plane, the joint assembly **116** allows the seat pan **110** to move horizontally to at least partially avoid (sudden) or delay transfer of the horizontal shock to a user seated on the seat pan **110.** Such horizontal movement is confined (relative to the bracket **114)** based on a kinematically predetermined path of the seat pan **110** relative to the bracket **114,** e.g. as defined based movement of the seat pan **110** when it is unloaded and subject to horizontal forces. Confined motion refers to motion that is limited in extent.

The joint assembly **116** may be configured to couple the plate **112** to the bracket **114** to constrain the plate **112** to reciprocal motion or reciprocal curvilinear motion relative to the bracket **114.** For example, the plate **112** may be configured to rock back-and-forth along a predetermined path. The joint assembly **116** may be configured to couple the plate **112** to the bracket **114** to constrain the plate **112** to reciprocal curvilinear motion relative to the bracket **114.** As referred to herein, reciprocal curvilinear motion refers to back-and-forth repetitive motion along predetermined a linear or a curved path. In some cases, the reciprocal curvilinear motion may be planar motion. For example, the plate **112** may rotate about an instant center located above the seat **104** or seat pan **110** (or any other point above the joint assembly **116)** between two predetermined end points defining a sector of a circle centered at the instant center, e.g. the plate **112** may rotate back and forth; alternating between clockwise and counter-clockwise rotation about the instant center.

In various embodiments, the joint assembly **116** may be configured to constrain the plate **112** to planar motion relative to the bracket **114,** e.g. partly circular motion in a plane.

In some embodiments, the plate **112** may not be constrained to pure rotation about a unitary instant center relative to the bracket **114.** For example, the plate **112** may move relative to the bracket **114** so as to define an instant centre having a varying location throughout movement of the plate **112** (relative to the bracket **114).** The path traced by the instant center, whether unitary (fixed instant center) or varying (moving instant center), may be referred to as a centrode associated with the movement. Advantageously, having an instant centre (or centrode) that is always (vertically) above the seat **104** or seat pan **110** may improve stability of the seating system **100** since the seat pan **110** would then tend to return to a position defined by the lowest gravitational potential that is dynamically stable. As such, in some embodiments, all feasible kinematic configurations of the plate **112** relative to the bracket define a centrode entirely traced vertically above the joint assembly.

Referring to **FIG. 2D****,** the joint assembly **116** may be configured to constrain the plate **112** to horizontal and vertical motion within a vertical plane **142,** i.e. motions in and out of the vertical plane **142** may be precluded from a range of possible achievable kinematic configurations of the plate **112** when coupled to the bracket **114** via the joint assembly **116.** The vertical plane **142** may be defined by the joint assembly **116** and/or the plate **112.** In some embodiments, the vertical plane **142** may be defined by the face **156** of the plate **112.** In some embodiments, the face **156** may be coincident with the vertical plane **142** or parallel thereto.

In various embodiments, the joint assembly **116** may be configured to constrain the plate **112** to cyclic, or cyclic planar, motion relative to the bracket **114.**

The motion of the plate **112** relative to the bracket **114** described above may allow confined horizontal movement of the seat pan **110** relative to the bracket **114.** Such movement may facilitate shock mitigation, e.g. by providing additional damping of the movement of the seat pan **110,** and mitigate a risk of a user being displaced away from the seating system **100** due to a lateral movement of the vessel **10** or other non-vertical shock. As referred to herein, confined horizontal movement may refer to horizontal movement that is confined between predetermined limits, e.g. the joint assembly **116** may contain stops to mitigate unbounded or uncontrolled horizontal movement of the seat pan **110** and/or the remainder of the seat **104.**

As referred to herein, the motion or path of the plate **112** may refer to a path traced by a point on the plate **112** as the plate **112** moves. Paths traced by any number of points on the plate **112** may be substantially parallel as the eccentricity in paths caused by deformation of the plate **112** may be small in comparison to the length of the paths themselves.

The suspension system **102** includes a damper assembly **118** oriented to dampen movement of the plate **112** relative to the bracket **114** to absorb horizontal shocks. Referring to **FIGS. 2A-2D****,** the damper assembly **118** may include a pair of dampers **118A, 118B.**

The pair of dampers **118A, 118B** may be attached to the bracket **114.** For example, the pair of dampers **118A, 118B** may be attached to the bracket **114** via the base **120.** In some embodiments, the pair of dampers **118A, 118B** are rigidly attached to the bracket **114.** In some embodiments, the bracket **114** may yet slide relative to the pair of dampers **118A, 118B,** e.g. when the pair of dampers **118A, 118B** are rigidly attached to the base **120** and the bracket **114** is slidably coupled to the base **120.**

Referring to **FIGS. 2A-2D****,** the pair of dampers **118A, 118B** of the damper assembly **118** are inclined in opposing directions within a plane parallel to the vertical plane **142.** Such positioning and orientation of the pair of damper **118A, 118B** may allow damping of horizontal movement of the plate **112** relative to the bracket **114.** Due to the orientation of the pair of dampers **118A, 118B,** a certain amount of damping may also be possible in the vertical direction via the pair of dampers **118A, 118B.** In various embodiments, the bracket **114** is configured for movement relative to the vessel **10.** For example, the bracket **114** may be configured or be allowed to slide or otherwise move vertically relative to the vessel **10.** In such cases, the pair of dampers **118A, 118B** may allows damping of vertical movement of the bracket **114** relative to the vessel. In various embodiments, the pair of dampers **118A, 118B** are inclined in opposing directions in the vertical plane **142** to allow damping of horizontal and vertical movement of the bracket **114** relative to the base **120.**

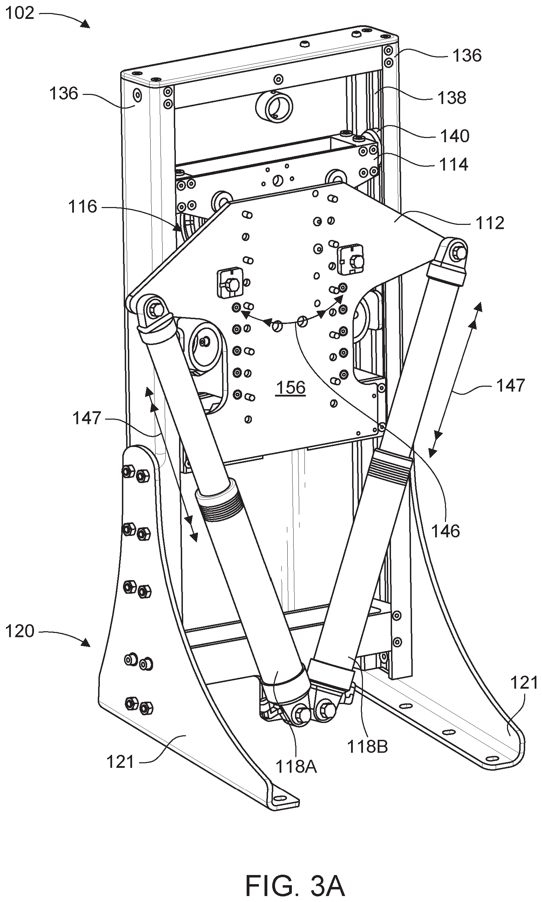

**FIG. 3A** is a perspective view of a suspension system **102,** in accordance with an embodiment.

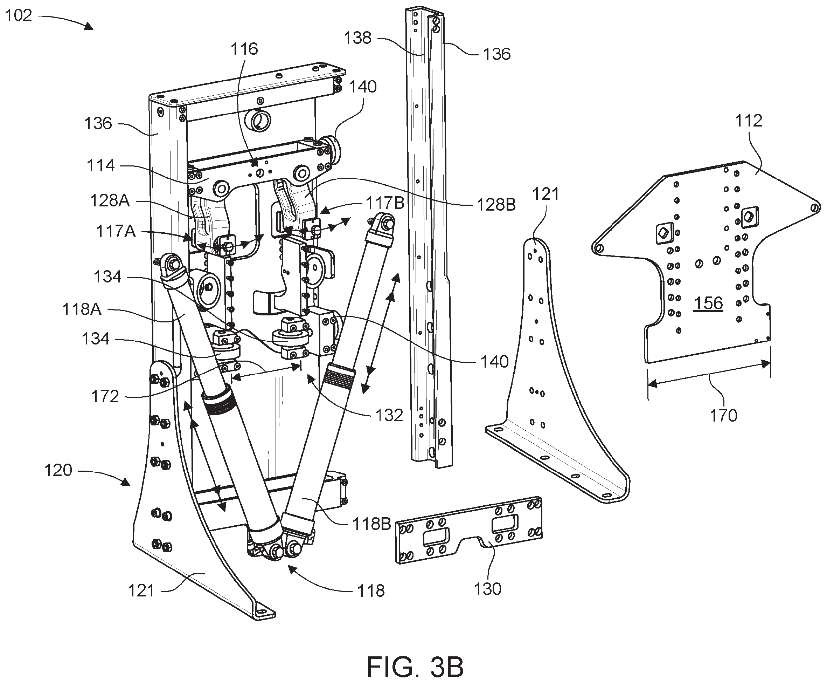

**FIG. 3B** is a partially exploded perspective view of the suspension system **102** of **FIG. 3A****.**

Referring to **FIGS. 3A-3B****,** the bracket **114** is slidably coupled to the base **120** to allow constrained vertical sliding of the bracket **114** relative to the base **120.** As such, the plate **112** may be allowed to move vertically so as to support vertical movement of the seat pan **110.**

As shown in **FIGS. 3A-3B****,** the base **120** defines a pair of guides **136.** The pair of guides **136** are disposed opposite to each other to receive the bracket **114** between the pair of guides **136.** The bracket **114** when so received in the pair of guides **136** is constrained by the pair of guides **136** to motion between and along the pair of guides **136.** The pair of guides **136** may be vertically aligned so that such motion is vertical motion.

In various embodiments, the bracket **114** includes wheels **140** movably engaged with the pair of guides **136.** For example, the wheels **140** may be no more than a pair of wheels, each associated with a corresponding guide of the pair of guides **136.** As shown in **FIGS. 3A-3B****,** the wheels **140** may be at least two pairs of wheels, each wheel of which being positioned at a corner of the bracket **114.** Each guide of the pair of guides **136** may include a track **138** suitable to receive a corresponding wheel **140** to allow rolling of the wheel **140** in guide **136** to facilitate vertical movement of the bracket **114.** As such, the wheels **140** may be received in the pair of guides **136** to allow rolling of the pair of wheels **140** in the pair of guides **136** to facilitate vertical movement of the bracket **114.** The dampers **118A, 118B** are coupled or connected to the base **120** to allow damping of the constrained vertical sliding of the bracket **114** relative to the base **120.** In various embodiments, the guides **136** may define stops to limit vertical travel of the bracket **114.**

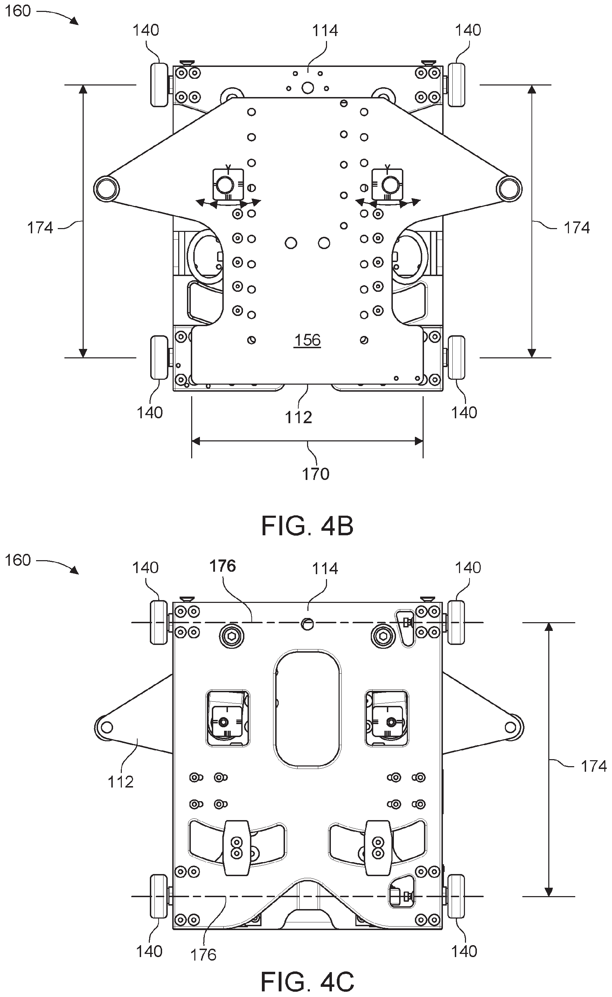

In various embodiments, each pair of wheels **140** may be aligned so as to rotate about a respective common axis **176,** as shown in **FIG. 4C****.** In various embodiments, each common axis **176** may be centered along a common axle extending between the pair of wheels **140** and may be mounted on to the wheels **140.** In various embodiments, each common axis **176** may be centered along respective separate axles of the pair of wheels **140,** the pair of wheels **140** being spaced apart from each other so as to rotate independently on their respective axles. The common axes **176** may be separated by a spacing **174.**

Referring to **FIGS. 3A-3B****,** the joint assembly **116** includes a pair of members **128A, 128B.** The joint assembly **116** is coupled to the plate **112** via the vertical face **156** of the plate **112.** Each of the members **128A, 128B** is pivotably coupled to each of the plate **112** and the bracket **114** to allow the plate **112** to swing about the bracket **114.** Such swinging, rotational, or rocking motion of the members **128A, 128B** causes curvilinear motion **146** or travel of the plate **112** to facilitate horizontal shock absorption. The member **128A** is pivotably coupled to the face **156** of the plate **112** at the joint **117A** at one end thereof and pivotably coupled to the bracket **114** at another, opposite end thereof. The member **128B** is pivotably coupled to the face **156** of the plate **112** at the joint **117B** at one end thereof and pivotably coupled to the bracket **114** at another, opposite end thereof. The axes of rotation of the members **128A, 128B** at the respective (pivoting) joints **117A, 117B** with the plate **112** may be parallel to each other. Such axes of rotation may also be parallel to axes of rotation at (pivoting) joints connecting the members **128A, 128B** to the bracket **114.** For example, in such an embodiment, the plate **112** may be constrained to planar motion relative to the bracket **114.** Such planar motion may be parallel to the vertical plane **142.** The bracket **114** may be constrained to vertical motion parallel to the vertical plane **142.**

The dampers **118A, 118B** move along inclined directions **147** to dampen both horizontal and vertical movement. A such, the dampers **118A, 118B** may dampen (horizontal) movement of the plate **112** relative to the bracket **114** while also dampening (vertical) movement of the bracket **114** relative to the base **120** and/or the vessel. As shown in **FIG. 3B****,** the pair of dampers **118A, 118B** correspond to the pair of members **128A, 128B.**

An anti-friction device **132** is disposed between the plate **112** and the bracket **114.** The anti-friction device **132** is independent of the joint assembly **116.** The anti-friction device **132** may not form part of the joint assembly **116** and may not form a coupling joint between the plate **112** and the bracket **114.** In some embodiments, the anti-friction device **132** may be spaced apart from the joint assembly **116.** The anti-friction device **132** supports the plate **112** and the bracket **114** against each other, independent of the joint assembly **116,** while allowing the plate **112** and the bracket **114** to move relative to each other. The anti-friction device **132** supports the plate **112** under deformation. The anti-friction device **132** may support the plate **112** and the bracket **114** against each other by contacting each of the plate **112** and the bracket **114** under deformation while allowing the plate **112** and the bracket **114** to move relative to each other.

As referred to herein, an anti-friction device **132** refers to a support structure that is configured to reduce overall frictional resistance to motion by an object, e.g. the plate and/or the bracket, pressed or supported against the anti-friction device **132** to allow sliding thereon. The anti-friction device **132** can reduce friction by means of rollers or by providing a sufficiently rolling or non-rolling smooth frictional surface, e.g. low roughness surface, for the object to slide on. For example, a low roughness height may be desirable to increase smoothness to reduce friction. In some embodiments, the anti-friction device **132** may be a smooth bar or plate. The required reduction in overall frictional resistance to motion may depend on physical characteristics of the object being slid on the anti-friction device **132** and the normal force applied by the object on the anti-friction device **132.** For example, greater friction reduction, such as in the form of greater smoothness or lubrication, may be required when the object is rougher and/or applies greater force against the anti-friction device **132.** Such friction reduction is important as it mitigates heat generation and prevents fusing of the plate and/or bracket (to the friction device and each other) during relative motion therebetween. For example, a clutch effect, wherein the plate and bracket clutch to one another and/or the anti-friction device **132,** may be prevented.

In some embodiments, the anti-friction device **132** may be a plurality of rollers. In some embodiments, the anti-friction device **132** may be a bar, plate, or other unitary or non-unitary structure defining a supporting surface that is sufficiently smooth to allow sliding without fusing or clutching of sliding parts to each other.

In various embodiments, the anti-friction device **132** may include a stationary and/or non-rotating element. In various embodiments, the anti-friction device **132** may include no movable joints, e.g. pivoting or rotating joints, and/or may comprise only a unitary and/or stationary component. In some embodiments, the anti-friction **132** may comprise only one or more low friction sliding elements or assemblies, e.g. an anodized aluminum element suitable to slide on a plastic puck.

As shown in **FIGS. 3A-3B****,** the anti-friction device **132** (e.g. each of the plurality of rollers) is attached to the bracket **114** to self-rotate while anchored to the bracket **114.** The anti-friction device **132** may be unattached to the plate **112** while attached to the bracket **114,** e.g. the anti-friction device **132** may be only resting on or contacting the plate **112** without being attached, fastened, or otherwise coupled to the plate **112.** As the plate **112** and/or the bracket **114** deform under mechanical stress, the anti-friction device **132** resists the deformation to improve rigidity of the assembly while allowing the plate **112** to continue to slide against the bracket **114.** The anti-friction device **132** includes a plurality of rotatable cylinders **134** that rotate as the plate **112** undergoes motion relative to the bracket **114.** It is understood that, in some embodiments, the anti-friction device **132** (one or more, or each of the plurality of rollers) may be attached to the plate **112** instead of the bracket **114,** e.g. a plurality of rollers providing anti-friction function may self-rotate while anchored to the plate **112.** The anti-friction device **132** may be unattached to the bracket **114** while attached to the plate **112,** e.g. the anti-friction device **132** may be only resting on or contacting the bracket **114** without being attached, fastened, or otherwise coupled to the bracket **114.** Each roller providing an anti-friction function may self-rotate about a central axis thereof, e.g. the central axis of a rotatable cylinder **134** may define the rotational axis for self-rotation of the corresponding roller.

As shown in **FIGS. 3A-3B****,** a faceplate **130** may be disposed over the anti-friction device **132.** The faceplate **130** may attached, fastened, and/or bolted so as to form part of the bracket **114.** The faceplate **130** may define a plurality of slots to allow protrusion therethrough of the anti-friction device **132.** For example, each rotatable cylinder **134** may be received through a corresponding slot of the faceplate **130.** Advantageously, this may prevent damage to the anti-friction device **132,** e.g. by mitigating mispositioning of the plate **112.** Advantageously, the faceplate **130** may mitigate failure of the anti-friction device **132** by providing a load-bearing member in the event of excessive forces applied on to the plate **112** and/or the bracket **114.**

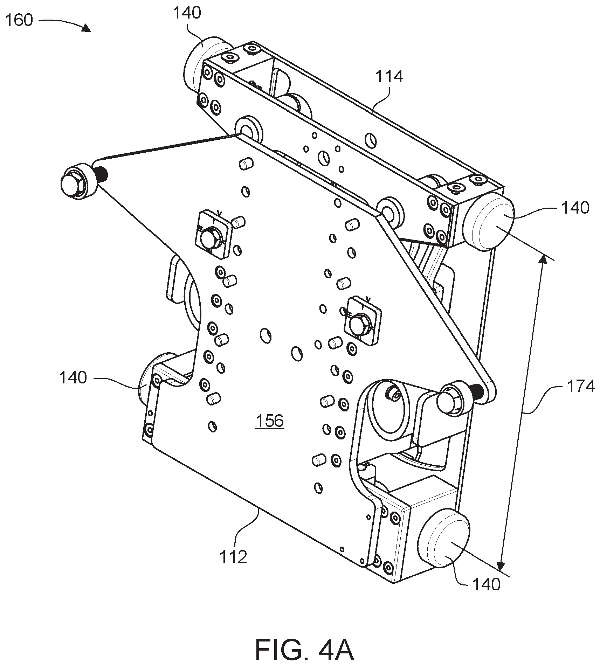

**FIG. 4A** is a perspective view of a subassembly **160** of the suspension system **102** of **FIGS. 3A-3B****.**

**FIG. 4B** is a front elevation view of the subassembly **160** of **FIG. 4A****.**

**FIG. 4C** is a rear elevation view of the subassembly **160** of **FIG. 4A****.**

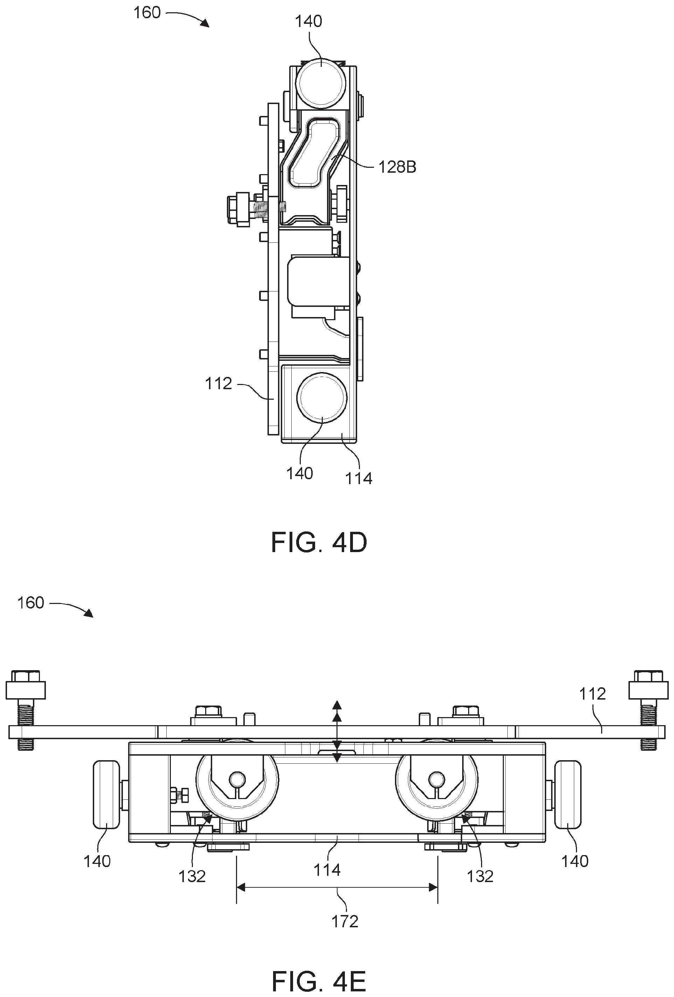

**FIG. 4D** is a side elevation view of the subassembly **160** of **FIG. 4A****.**

**FIG. 4E** is a bottom plan view of the subassembly **160** of **FIG. 4A****.**

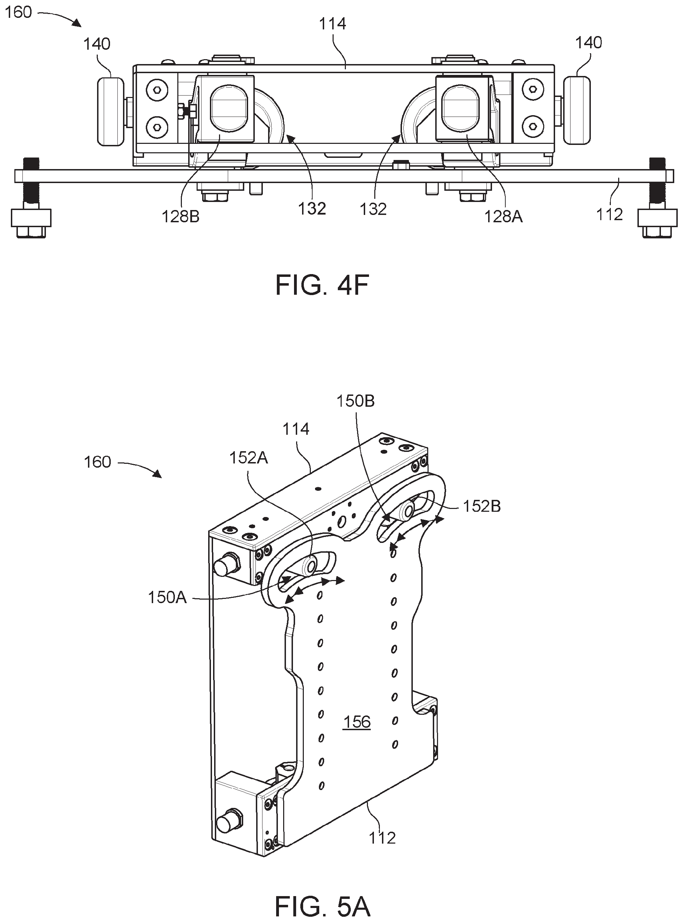

**FIG. 4F** is a top plan view of the subassembly **160** of **FIG. 4A****.**

The subassembly **160** comprises the plate **112,** the bracket **114,** the joint assembly **116** coupling the plate **112** to the bracket **114.** The curvilinear motion of the plate **112** is indicated by double-headed arrows in **FIG. 4B****.** Notional directions of force applied on the bracket **114** by the plate **112** and an opposing force are indicated by double-headed arrows in **FIG. 4E****.**

The subassembly **160** attaches to other components of the suspension system **102.** The seat pan **110** may attach to the plate **112** of the subassembly **160.** The bracket **114** of the subassembly may be attached to the base **120,** as shown in **FIGS. 3A-3B****.**

**FIG. 5A** is a perspective view of a subassembly **160** of the suspension system **102,** in accordance with another embodiment.

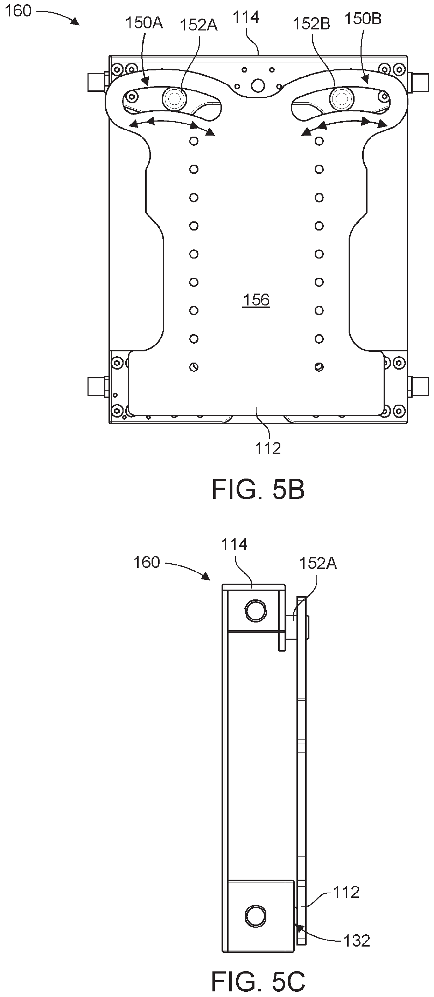

**FIG. 5B** is a front elevation view of the subassembly **160** of **FIG. 5A****.**

**FIG. 5C** is a side elevation view of the subassembly **160** of **FIG. 5A****.**

Referring to **FIGS. 5A-5C****,** the joint assembly **116** comprises a pair of cam slots **150A, 150B** and a pair of cam followers **152A, 152B** complementary to, and received into, the pair of cam slots **150A, 150B.** Each cam slot **150A, 150B** may receive a corresponding cam follower **152A, 152B.** The cam slots are formed on the vertical face **156** defined by the plate **112** and to which the seat pan **110** is attached. The curvilinear motion of the plate **112** achieved by sliding of the cam followers **152A, 152B** in the cam slots **150A, 150B** is indicated by double-headed arrows in **FIG. 5A****.**

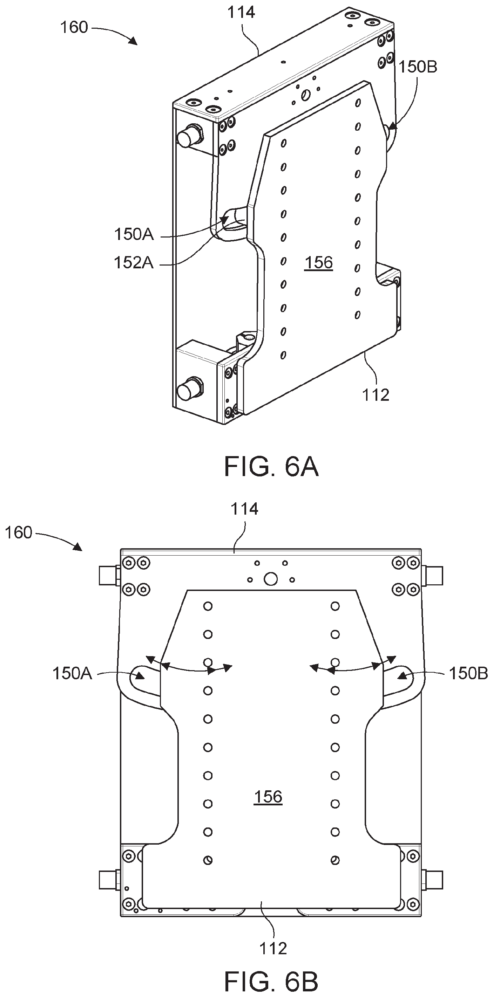

**FIG. 6A** is a perspective view of a subassembly **160** of the suspension system **102,** in accordance with yet another embodiment.

**FIG. 6B** is a front elevation view of the subassembly **160** of **FIG. 6A****.**

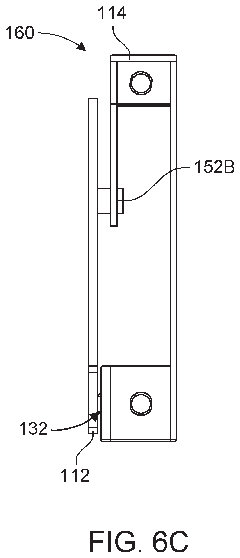

**FIG. 6C** is a side elevation view of the subassembly **160** of **FIG. 6A****.**

Referring to **FIGS. 6A-6C****,** the joint assembly **116** comprises a pair of cam slots **150A, 150B** and a pair of cam followers **152A, 152B** complementary to, and received into, the pair of cam slots **150A, 150B.** Each cam slot **150A, 150B** may receive a corresponding cam follower **152A, 152B.** The cam slots are formed on the vertical face **156** defined by the plate **112** and to which the seat pan **110** is attached. The curvilinear motion of the plate **112** achieved by sliding of the cam followers **152A, 152B** in the cam slots **150A, 150B** is indicated by double-headed arrows in **FIG. 6A****.**

Each of the joint assemblies **116** of **FIGS. 5A-5C** and **FIGS. 6A-6C** is configured to constrain the plate **112** to planar motion relative to the bracket **114.**

In the embodiment of the subassembly **160** in **FIGS. 5A-5C****,** the cam slots **150A, 150B** are formed on the plate **112** and the cam followers **152A, 152B** are formed on the bracket **114.** In the embodiment of the subassembly **160** in **FIGS. 6A-6C****,** the cam slots **150A, 150B** are formed on the bracket **114** and the cam followers **152A, 152B** are formed on the plate **112.**

Each of the cam slots **150A, 150B** may be arc-shaped, e.g. each of the cam slots **150A, 150B** may define a centreline or centroid extending therealong that is a circular arc to cause the respective cam followers **152A, 152B** to trace an arc in space when they slide along their respective cam slots **150A, 150B.** Each of the cam slots **150A, 150B** may be substantially identical.

Each of the cam followers **152A, 152B** may substantially cylindrical. The diameter of each of the cam followers **152A, 152B** is adapted to corresponding widths of the cam slots **150A, 150B,** e.g. the diameters may be slightly smaller than the widths. The cam followers **152A, 152B** may be slidable and rotatable within their respective cam slots **150A, 150B.**

As the cam followers **152A, 152B** slide within the cam slots **150A, 150B,** the plate **112** slides horizontally relative to the bracket **114** and rotates relative to the bracket **114.**

In various embodiments, the cam follower **152A, 152B** may include sliders, e.g. linear plain bearing. In various embodiments, the cam slots **150A, 150B** may include a rail, e.g. a curved double rail (with square rail profile) suitable to receive a linear plain bearing.

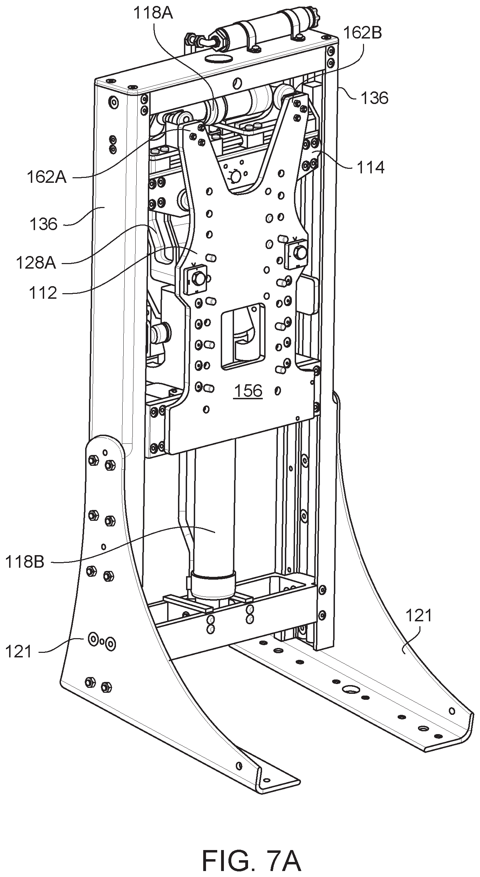

**FIG. 7A** is a perspective view of a suspension system **102,** in accordance with another embodiment.

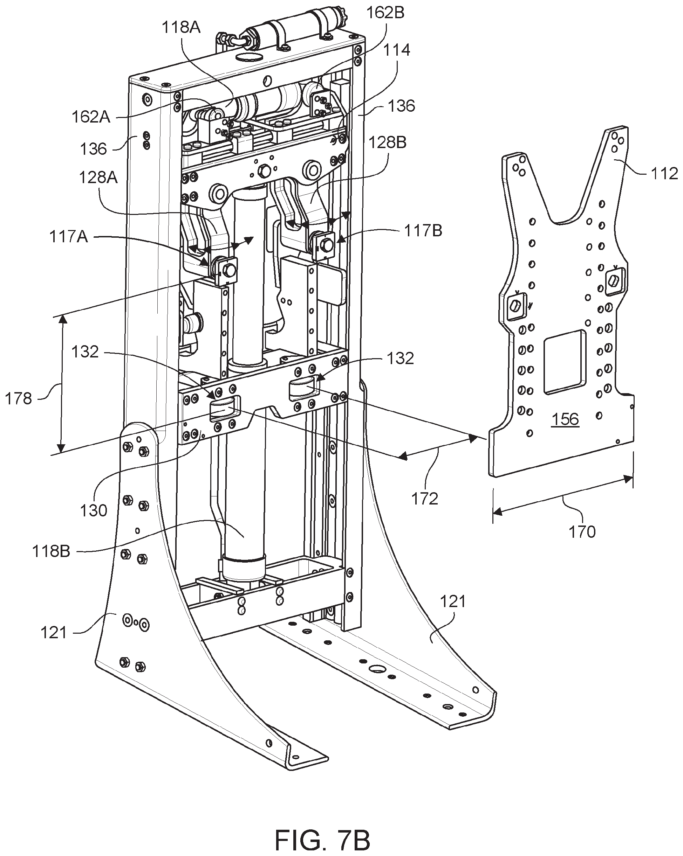

**FIG. 7B** is a partially exploded perspective view of the suspension system **102** of **FIG. 7A****.**

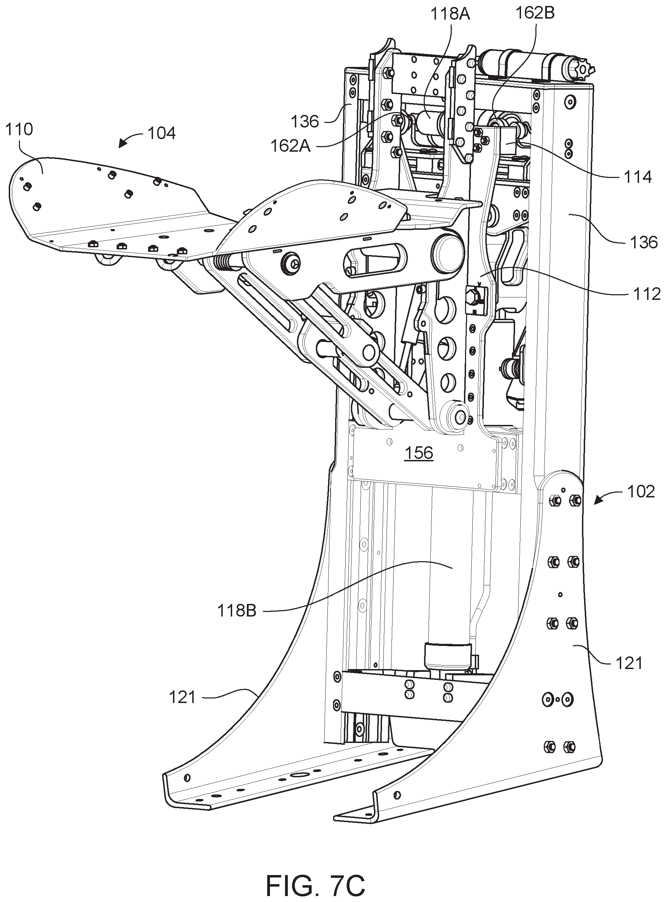

**FIG. 7C** is a perspective view of the suspension system **102** of **FIG. 7A** having mounted thereon a seat pan **110.**

Referring to **FIGS. 7A-7C****,** the suspension system **102** comprises two dampers, a horizontal damper **118A** and a vertical damper **118B.**

The horizontal damper **118A** may be rigidly mounted to the bracket **114** or otherwise mounted on to the suspension system **102** to remain stationary relative to the bracket **114.** The horizontal damper **118A** may be connected to the plate **112** to damp horizontal, rotating, and/or curvilinear motion thereof relative to the bracket **114.**

Referring to **FIGS. 7A-7C****,** the horizontal damper **118A** may be pivotably coupled to the plate **112** via a pair of pivot joints **162A, 162B** disposed at opposite ends of the horizontal damper **118A** such that the horizontal damper **118A** provides damping to movement of the pair of pivot joints **162A, 162B** to or away from each other. For example, the horizontal damper **118A** may be a cylindrical damper such as a twin tube damper and the pair of pivot joints **162A, 162B** may be formed at opposite longitudinal ends of the horizontal damper **118A.** When the seating system **100** receives a shock, the plate **112** slides sideways and also rotates. Such rotation, and hence horizontal movement, of the plate **112** is damped by the horizontal damper **118A.** The damper **118B** is connected to the base **120** and the bracket **114** to dampen vertical movement of the bracket **114** relative to the base **120.**

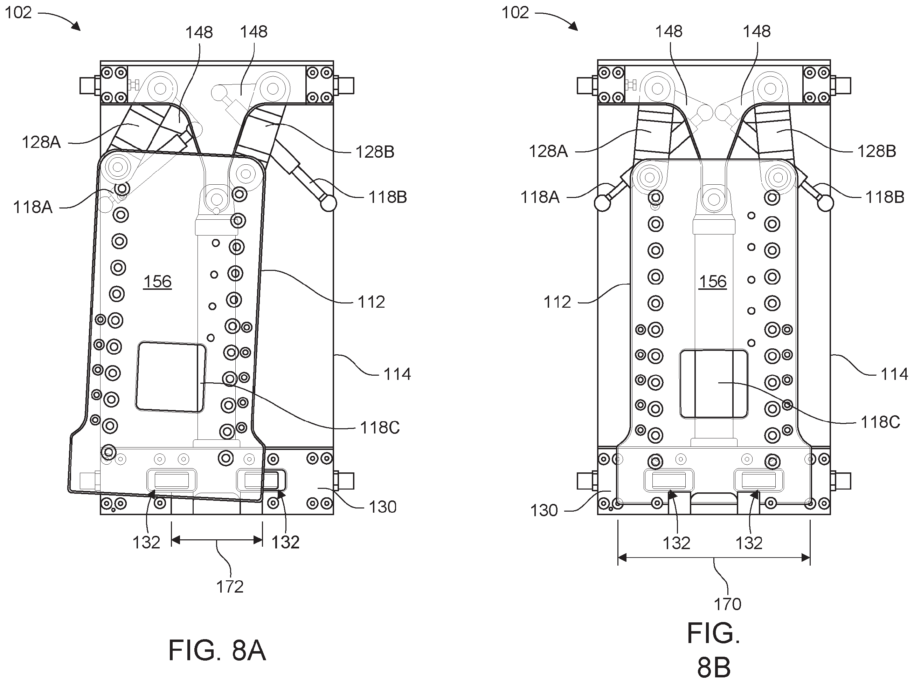

**FIG. 8A** is a schematic front elevation view of a portion of a suspension system **102** in a first stage of operation, in accordance with an embodiment.

**FIG. 8B** is a schematic front elevation view of the portion of the suspension system **102** in a second stage of operation, in accordance with an embodiment.

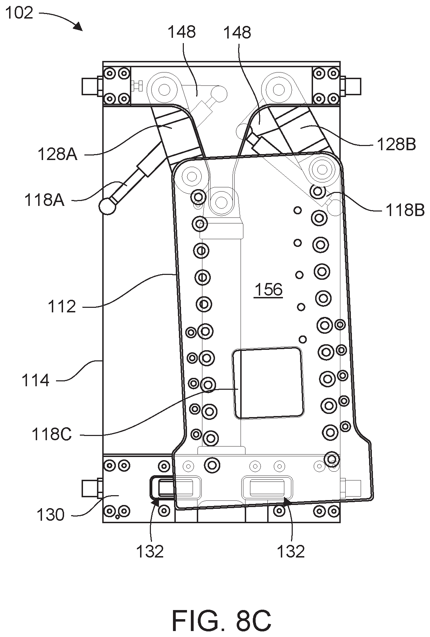

**FIG. 8C** is a schematic front elevation view of the portion of the suspension system **102** in a third stage of operation, in accordance with an embodiment.

**FIG. 8D** is an enlarged front elevation view of the portion of the suspension system **102** in **FIGS. 8A-8C****.**

In the drawings in **FIGS. 8A-8D****,** the plate **112** is rendered semi-transparent.

Similar to the embodiments of the suspension system **102 in** **FIGS. 3A-****3B, 4A-4F, 7A-7C,** the embodiment of **FIGS. 8A-8D** includes a pair of members **128A, 128B,** each of which is pivotably coupled to each of the plate **112** and the bracket **114.**

The suspension system **102** in **FIGS. 8A-8D** further includes dampers **118A, 118B** corresponding to the pair of members **128A, 128B.** Additionally, a vertical damper **118C** is coupled to the base **120** (not shown) and is provided to dampen vertical movement of the bracket **114.** Each of the pair of dampers **118A, 118B** is attached to the bracket **114** and is attached to a corresponding member of the pair of members **128A, 128B** via a corresponding arm **148** (or link pivot). Each arm **148** extends perpendicularly away from its corresponding member **128A, 128B.** In such embodiments, as the plate **112** travels horizontally between two opposing ends (two positions of the plate **112** that define that maximum horizontal movement of the plate **112),** the dampers **118A, 118B** are successively and alternately extended and compressed. For example, as shown in **FIG. 8C****,** the damper **118A** is extended and the damper **118B** is compressed.

In some embodiments, the damper **118A, 118B** may be gas springs. **FIG. 8D** shows a preferred embodiment for when the dampers **118A, 118B** are gas springs. The members **128A, 128B,** dampers **118A, 118B,** and the arms **148** are configured such that when the plate **112** is at a peak horizontal travel, a distance **D2** between the arm **148** of the member **128B** and a force vector **S1** of the compressed damper **118B** is greater than a distance **D1** between the arm **148** of the member **128A** and a force vector **S2** of the extended damper **118A.** Advantageously, such a configuration facilitates helps increasing the force to return the plate **112** back to center and is especially important when using gas springs which may tend to have relatively low force ratios of around 1.4, i.e. a force during maximum compression of a damper may only be 1.4 times higher than a force during maximum extension of the damper. Compared to a linear spring which has a theoretical force ratio of infinity (i.e., zero force at full extension). The difference between distances **D1** and **D2** may be less important when using dampers that greater force ratios.

**FIG. 9** is a schematic front elevation view of a subassembly **160,** in accordance with yet another embodiment.

The subassembly **160** of **FIG. 9** may be similar in some respects to that shown in **FIGS. 4A-4D****.** However, the subassembly **160** of **FIG. 9** may comprise a first anti-friction device **132A** (e.g. a first pair of rollers) disposed below the joint assembly **116** and a second anti-friction device **132B** (e.g. a second pair of rollers) disposed above the joint assembly **116.**

It is found to be advantageous to increase the length of the members **128A, 128B.** However, increasing the length of the members **128A, 128B** may require additional support to achieve a desired rigidity and reduce mechanical stress on the members **128A, 128B.** It is found that using two spaced apart sets of anti-friction devices **132A, 132B** may allow the use of longer members **128A, 128B** while maintain a required rigidity and strength.

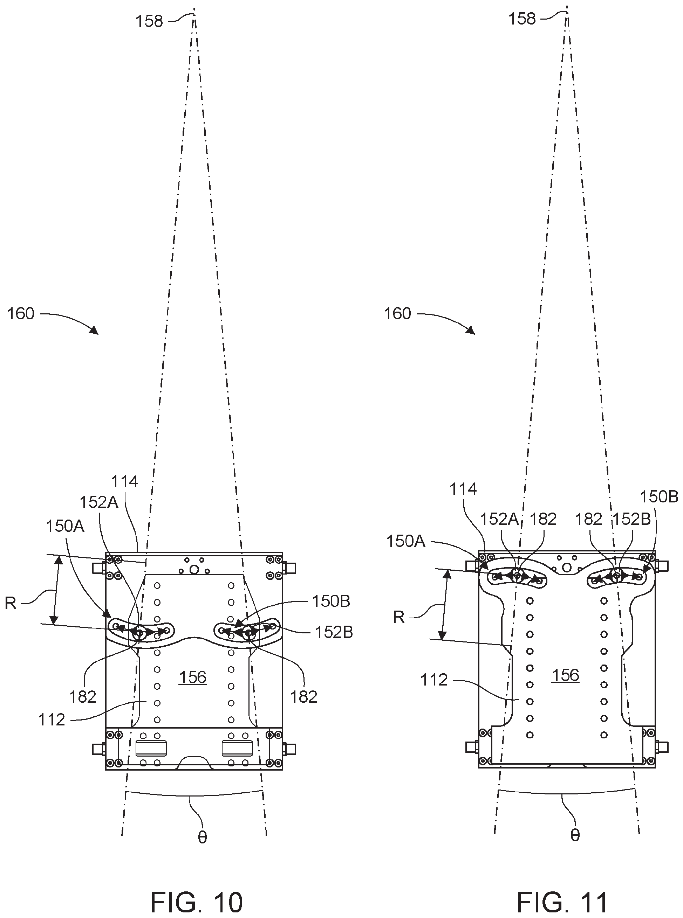

**FIG. 10** is a schematic front elevation view of the subassembly **160** of **FIGS. 6A-6B****.** In this drawing, the plate **112** is shown semi-transparent for clarity.

**FIG. 11** is a schematic front elevation view of the subassembly **160** of **FIGS. 5A-5B****.**

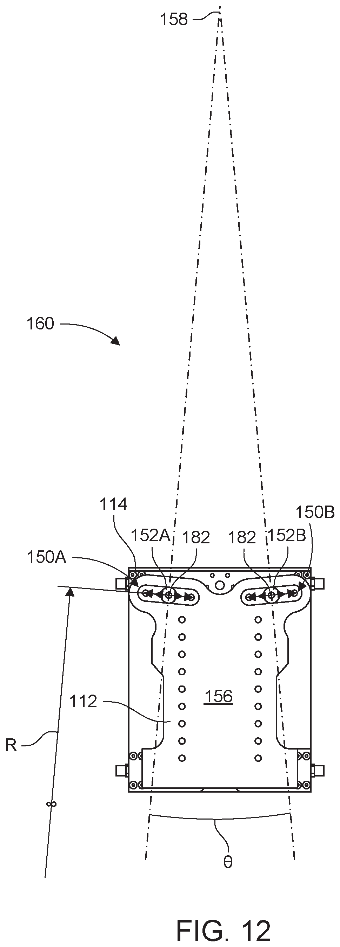

**FIG. 12** is a schematic front elevation view of a subassembly **160,** in accordance with further yet another embodiment.

**FIGS. 10-12** show various embodiments of subassemblies implemented using cam slots **150A, 150B** and cam followers **152A, 152B.** Advantageously, using cam slots and followers instead of pivotable members allow mimicking extremely long link length to reduce the amount of vertical movement. The instant centers **158** associated with the plate **112** for each of the subassemblies **160** are shown in **FIG. 10-****12.** The instant center height is set by the angle Θ and other parameters.

As the plate **112** moves, the instant center **158** may change. The set of all the feasible kinematic configurations of the plate **112** relative to the bracket **114** then define a centrode (relative to the bracket **114),** i.e. the locus of instant centers **158** of the set of all the feasible kinematic configurations of the plate **112.** In various embodiments, the centrode is entirely traced vertically above the joint assembly **116** and the seat pan **110,** relative to the bracket **114.**

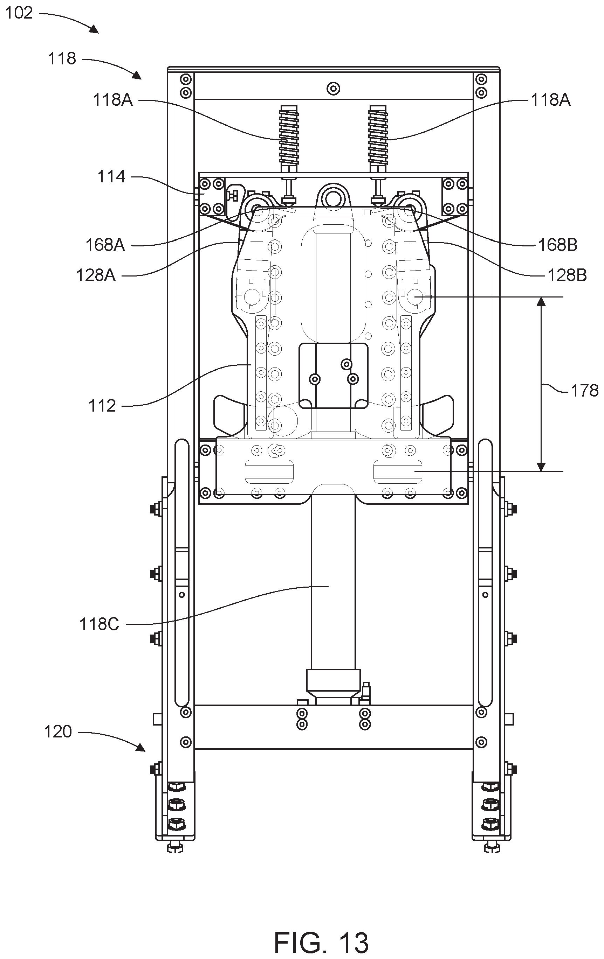

**FIG. 13** is a front elevation of a suspension system **102,** in accordance with another embodiment.

In the embodiment of **FIG. 13****,** the dampers **118A, 118B** are oriented vertically and configured to engage with respective tangs **168A, 168B,** which are coupled to the members **128A, 128B.** The tangs **168A, 168B** push the dampers **118A, 118B** to cause engagement of thereof with a frame to cause damping. For example, the dampers **118A, 118B** may be springs. A vertical damper **118C** is coupled to the bracket **114** and the base **120** to dampen vertical movement thereof.

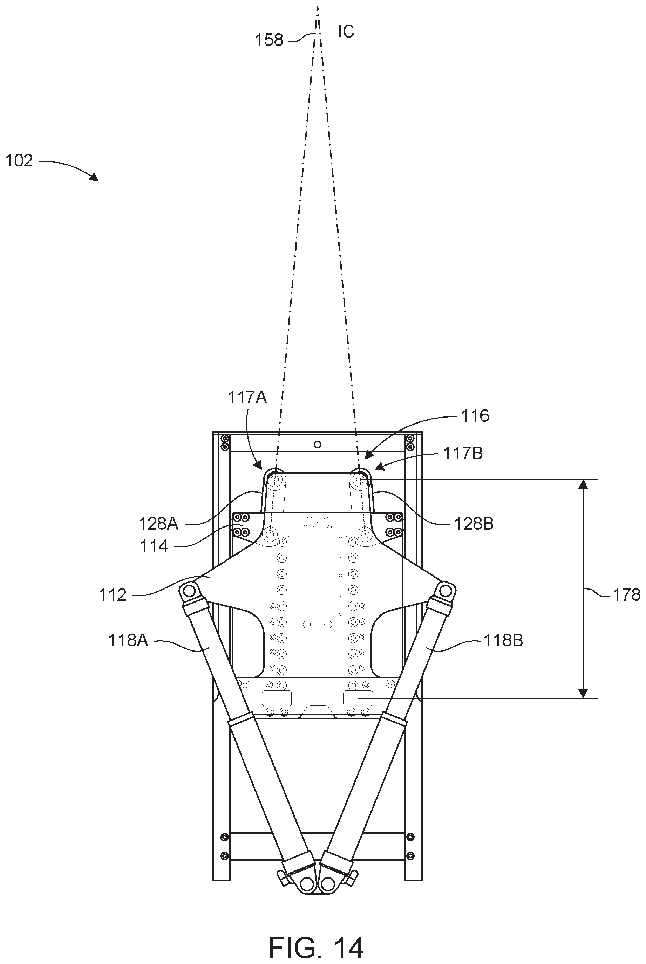

**FIG. 14** is a schematic front elevation view of a suspension system **102,** in accordance with an embodiment. In the embodiment of **FIG. 14****,** the members **128A, 128B** are inverted. In **FIG. 14****,** the plate is shown semi-transparent for clarity.

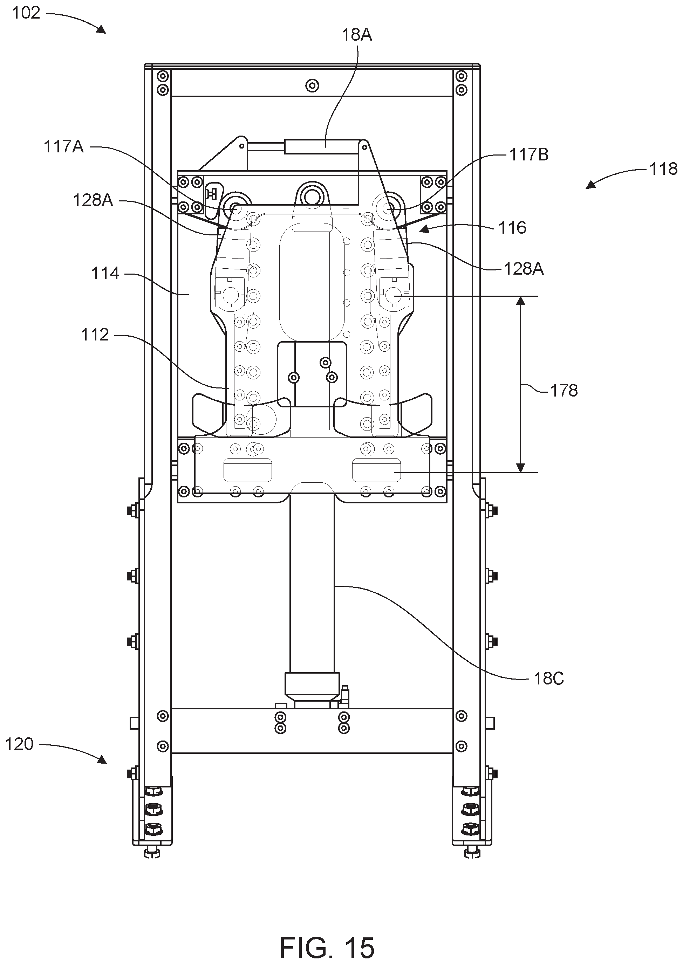

**FIG. 15** is a schematic front elevation view of a suspension system **102,** in accordance with yet another embodiment. The suspension system **102** includes a damper assembly **118** comprising dampers **118A, 118B.** The damper **118A** is coupled to the plate **112** and the bracket **114** at opposite ends thereof. The damper **118A** is configured such that the plate **112** and the bracket **114** are aligned and centered with respect to each other when the damper **118A** is in a resting or relaxed position. The damper **118C** is coupled to the bracket **114** and the base **120** to dampen vertical movement of the bracket **114.** Advantageously, the plate **112** and the bracket **114 in** **FIG. 15** is self-centering.

The seating system **100** may be installed on a vessel **10** such as a high-speed boat by bolting or otherwise fastening the bracket **114,** or base **120,** on to the vessel **10.** Once fastened a user may seat themselves on the seat pan **110.** Once securably seated, the vessel **10** may begin moving at high speeds through the water. Such movement creates sudden movements (shocks) that are transmitted through the vessel **10** to the seating system **100.** In response to a general forcing or shock, the bracket **114** may translate vertically to compensate for a vertical component of the shock, with dampers absorbing energy as the seat pan **110** rises and falls, and the plate **112** may translate horizontally (or in a vertical-horizontal plane) to compensate for a horizontal component of the shock, with dampers again absorbing energy as the seat pan **110** rocks sideways. While such translation is taking place, the anti-friction device **132** is engaged between the plate **112** and the bracket **114,** and self-rotate to accommodate movement of the plate **112** against the bracket **114.** The plate **112** and the bracket **114** continue to push against each other via the anti-friction device **132,** which in turn maintain rigidity of the assembly and mitigate excessive deformation while avoiding any significant interference with the shocking mitigation and absorption functions of the seating system **100.** Multi-di mensional shock mitigation is thereby achieved.

In various embodiments, the plate **112** may be dimensioned to allow the anti-friction device **132** (e.g. a support or rollers) to support the plate **112** as it moves horizontally. For example, a width **170** of the bottom of the plate **112** may be dimensioned so that the anti-friction device **132** remains in contact with the plate **112** through reciprocal motion of the plate **112** relative to the bracket **114,** or vice versa. In various embodiments, the width **170** may be at least 1.5 times the distance between opposite ends of the anti-friction device **132.** In some embodiments, the width **170** may be at least 1.5 times the center-to-center distance **172** between rollers of the anti-friction device **132.** Advantageously, increasing spacing between the rollers may improve stability of the plate **112.**

In various embodiments, it is found advantageous to increase a vertical distance **178** between the anti-friction device **132** and each of the pivoting joints **117A, 117B.** In various embodiments, the distance between the anti-friction device **132** and each of the pivoting joints **117A, 117B** may vary during reciprocal motion of the plate **112** relative to the bracket **114,** and vice versa. As defined here, the vertical distance **178** may refer to a maximum vertical distance, minimum vertical distance, average vertical distance, and/or a resting or neutral vertical distance (e.g. vertical distance when the plate **112** and the bracket **114** are stably resting relative to each other). For example, in some embodiments, an increased vertical distance **178** may reduce applied loading or stress on each of the members **128A, 128B** and the anti-friction device **132** due to cantilevered seat and/or occupant mass. For example, it may be particularly advantageous to utilize inverted members **128A, 128B** as they may facilitate significantly increasing vertical distance **178** between the anti-friction device **132** and the pivoting joints **117A, 117B.** An example embodiment utilizing inverted members **128A, 128B** is illustrated in **FIG. 14****.**

In various embodiments, it is found that increasing the spacing **174** between the common axes **176** (and the pairs of wheels **140)** may advantageously reduce the load on axles of the wheels **140** caused by the cantilevered seat and/or occupant mass. The spacing **174** may be based on at least a required vertical travel of the plate **112** relative to the bracket **114,** and/or on an allowable size of the subassembly **160.**

In various embodiments, the anti-friction device **132** may be aligned with a pair of the wheels **140,** e.g. a lower pair of wheels **140.** For example, the anti-friction device **132** may be centered along the common axis **176** of a pair of wheels **140** or vertically centered on this common axis **176.** Advantageously, such alignment may mitigate formation of bending moments due to vertical spacing between the common axis **176** and the anti-friction device **132** to thereby reduce deformation during operation.

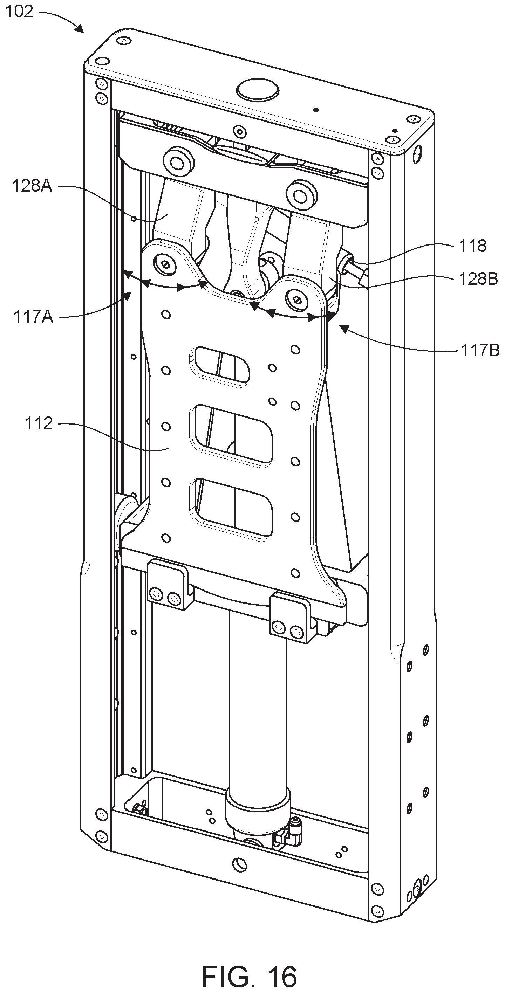

**FIG. 16** is a perspective view of a seating system **102,** in accordance with an embodiment.

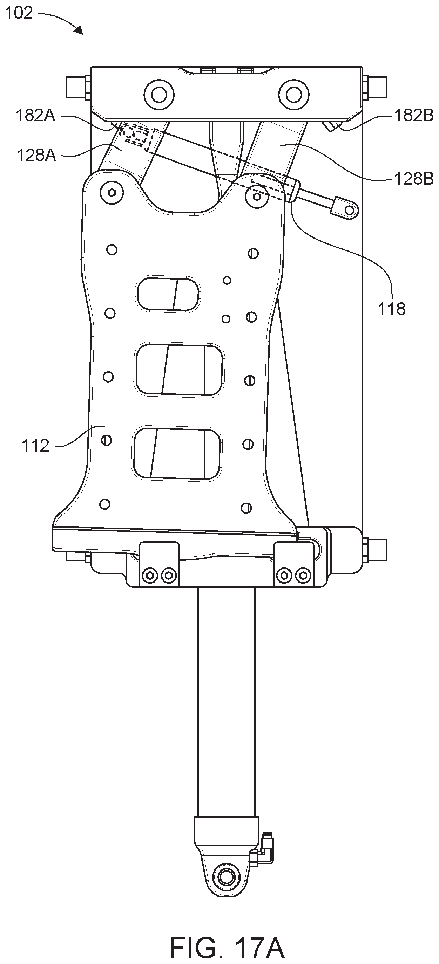

**FIG. 17A** is a front elevation view of a subassembly of the seating system **102** of **FIG. 16** in a first position.

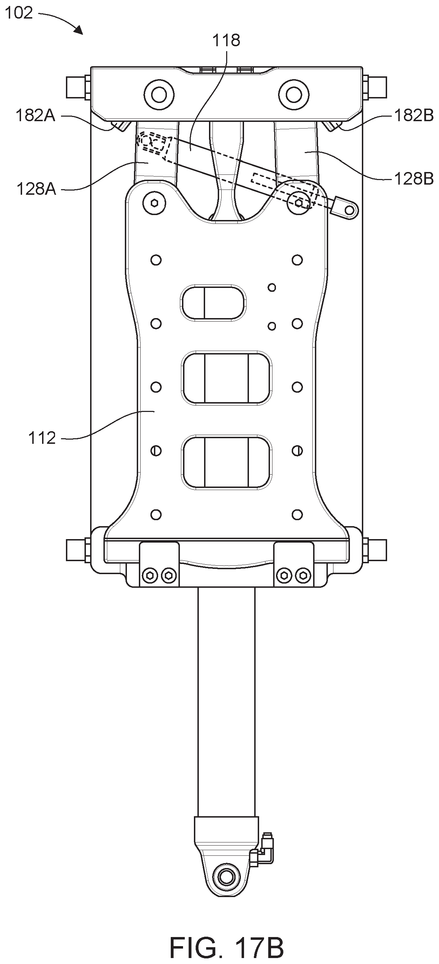

**FIG. 17B** is a front elevation view of a subassembly of the seating system **102** of **FIG. 16** in a second position.

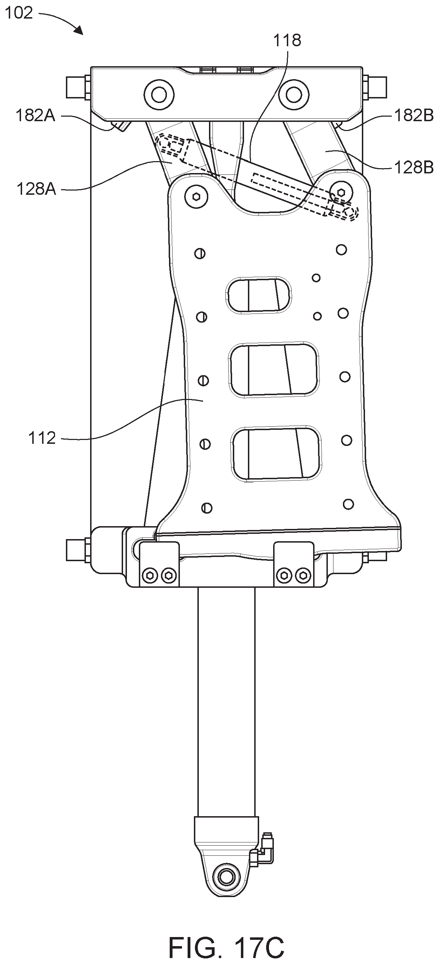

**FIG. 17C** is a front elevation view of a subassembly of the seating system **102** of **FIG. 16** in a third position.

In the first position, the plate **112** is in a rightmost position. In the second position, the plate **112** is centred. In the third position, the plate **112** is in a leftmost position.

Referring to **FIGS. 16****,** **17A-17C****,** the seating system **102** comprises a damper assembly **118** and members **128A, 128B.** The damper assembly **118** includes one and only one damper. The single damper is mounted to one member **128A** and one member **128A** alone. In particular, a first (terminal) end of the single damper is attached to the member **128A** and a second opposite (terminal) end of the single damper is attached to a stationary portion of the seating system **102.** The single damper may be a pure damper and may not provide a spring force. Advantageously, the arc of the members **128A, 128B** may provide sufficient "self-centering" force such that an external spring may not be required.

The seating system **102** may comprise bumpers **182A, 182B** or bottom-out bumpers to allow seat member(s) **128A, 128B** and/or the single damper to abut to limit travel or motion thereof as the plate **112** swings between the first, second, and third positions.

The embodiments described in this document provide non-limiting examples of possible implementations of the present technology. Upon review of the present disclosure, a person of ordinary skill in the art will recognize that changes may be made to the embodiments described herein without departing from the scope of the present technology. For example, no back rest may be provided, the seat pan may itself have integrated therewith a back rest, and the suspension systems described here may be configured for only horizontal movement and/or damping without vertical travel permitted by removing dampers and assemblies provided to enable vertical movement and/or damping. Yet further modifications could be implemented by a person of ordinary skill in the art in view of the present disclosure, which modifications would be within the scope of the present technology.

## Claims

1. A seating system for a vessel, comprising:
a seat pan;
a plate coupled to the seat pan to support the seat pan;
a bracket anchored to the vessel;
a joint assembly coupling the plate to the bracket to constrain the plate to reciprocal curvilinear motion relative to the bracket to allow confined horizontal movement of the seat pan relative to the bracket for shock mitigation;
a damper assembly oriented to dampen movement of the plate relative to the bracket to absorb horizontal shocks; and
an anti-friction device disposed between the plate and the bracket to support the plate and the bracket against each other, independent of the joint assembly, while allowing the plate and the bracket to move relative to each other.

2. The seating system of Claim 1, wherein the anti-friction device is spaced apart from the joint assembly.

3. The seating system of Claim 1 or 2, wherein the anti-friction device includes a plurality of rollers.

4. The seating system of Claim 3, wherein each of the plurality of rollers is attached to the bracket to self-rotate while anchored to the bracket.

5. The seating system of any one of Claims 3 or 4, wherein the plurality of rollers include a plurality of rotatable cylinders.

6. The seating system of any one of Claims 1 to 5, wherein the joint assembly comprises a pair of cam slots and a pair of cam followers complementary to, and received into, the pair of cam slots.

7. The seating system of Claim 6, wherein the plate defines a vertical face on which the cam slots are formed and to which the seat pan is attached.

8. The seating system of any one of Claims 1 to 7, wherein the joint assembly includes a pair of members, each of the members pivotably coupled to each of the plate and the bracket to allow the plate to swing about the bracket for shock mitigation.

9. The seating system of Claim 8, wherein the damper assembly includes a pair of dampers corresponding to the pair of members.

10. The seating system of any one of Claims 8 or 9, wherein each damper of the pair of dampers is attached to the bracket and is attached to a corresponding member of the pair of members via a corresponding arm extending perpendicularly away from the corresponding member.

11. The seating system of any one of Claims 1 to 10, wherein the joint assembly is configured to constrain the plate to planar motion relative to the bracket.

12. The seating system of any one of Claims 1 to 11, wherein all feasible kinematic configurations of the plate relative to the bracket define a centrode entirely traced vertically above the joint assembly and the seat pan.

13. The seating system of any one of Claims 1 to 12, wherein the damper assembly includes a pair of dampers inclined in opposing directions in a vertical plane to allow damping of horizontal movement of the plate relative to the bracket and vertical movement of the bracket relative to the vessel.

14. The seating system of Claim 13, further comprising:
a base rigidly attached to the vessel, the bracket being slidably coupled to the base to allow constrained vertical sliding of the bracket relative to the base, the pair of dampers coupled to the base to allow damping of the constrained vertical sliding of the bracket relative to the base.

15. The seating system of any one of Claims 1 to 14, further comprising:
a base attached to the vessel, the bracket being slidably coupled to the base to allow constrained vertical sliding of the bracket relative to the base, wherein a damper is connected to the base and the bracket to dampen vertical movement of the bracket relative to the base.

16. The seating system of any one of Claims 1 to 15, wherein the plate defines a vertical face to which is attached the seat pan, the seating system further comprising:
a platform positioned below the seat pan and cantilevered perpendicularly outwardly from the plate to support the seat pan; and
a brace disposed between the plate and the platform and inclined relative to the plate to couple the plate to the platform to support the platform.

17. The seating system of Claim 16, further comprising:
an inclined damper coupled to the platform and the plate to dampen movement of the brace.

18. The seating system of Claim 17, wherein the brace is a two-bar linkage.

19. The seating system of any one of Claims 1 to 18, wherein the anti-friction device is a first anti-friction device and is disposed below the joint assembly, the seating system further comprising:
a second anti-friction device disposed between the plate and the bracket to support the plate and the bracket against each other, independent of the joint assembly, while allowing the plate and the bracket to move relative to each other, the second anti-friction device being positioned above the joint assembly.

20. The seating system of Claim 19, wherein the second anti-friction device is spaced apart from the joint assembly.

21. A marine vessel, comprising a seating system according to any one of Claims 1 to 20, wherein the vessel is the marine vessel.

22. A suspension system for a seat pan of a vessel, comprising a plate suitable to be coupled to the seat pan to support the seat pan;
a bracket anchored suitable to be anchored to the vessel;
a joint assembly coupling the plate to the bracket to constrain the plate to reciprocal curvilinear motion relative to the bracket to allow confined horizontal movement of the seat pan relative to the bracket for shock mitigation;
a damper assembly oriented to dampen movement of the plate relative to the bracket to absorb horizontal shocks; and
an anti-friction device disposed between the plate and the bracket to support the plate and the bracket against each other, independent of the joint assembly, while allowing the plate and the bracket to move relative to each other.

23. The suspension system of Claim 22, wherein all feasible kinematic configurations of the plate relative to the bracket define a centrode entirely traced vertically above the joint assembly.

24. The suspension system of any one of Claims 22 or 23, further comprising:
a base suitable to be attached to the vessel, the bracket being slidably coupled to the base to allow constrained vertical sliding of the bracket relative to the base, wherein a damper is connected to the base and the bracket to dampen vertical movement of the bracket relative to the base.
